# EUROPEAN PATENT SPECIFICATION

(11) **EP 2 207 324 B1**
(45) Date of publication and mention of the grant of the patent: **17.04.2013**
(21) Application number: 09174695.8
(22) Date of filing: 30.10.2009
(51) Int. Cl.: H04L 29/06, H04W 12/06

(54) **Communication server, radio base station, communication system, and communication method**
Kommunikationsserver, Funkbasisstation, Kommunikationssystem und Kommunikationsverfahren
Serveur de communication, station de base radio, système de communication, et procédé de communication

(30) Priority: 08.01.2009 JP 2009002613
(43) Date of publication of application: 14.07.2010
(73) Proprietor: FUJITSU LIMITED, Kawasaki-shi, Kanagawa 211-8588 (JP)
(72) Inventor: Miyazaki, Nao, Kawasaki-shi Kanagawa 211-8588 (JP); Hashimoto, Masanori, Kawasaki-shi Kanagawa 211-8588 (JP); Motohashi, Kayo, Kawasaki-shi Kanagawa 211-8588 (JP); Tezuka, Yasuo, Kawasaki-shi Kanagawa 211-8588 (JP)
(74) Representative: Fenlon, Christine Lesley

(56) References cited:
- EP-A1- 1 775 976
- WO-A1-2004/040938

## Description

### FIELD

The embodiments of the invention discussed herein are related to a communication server, a radio base station, a communication system, and a communication method.

### BACKGROUND

Small-scale radio base stations that connect to mobile communication provider networks through broadband lines such as ADSL (asymmetric digital subscriber line) are beginning to be introduced in mobile communication systems that perform communication through mobile terminals such as mobile phones. For example, a femto base station is used that provides a communication area in residential and small to mid-sized business environments.

For example, a connection system (e.g., an ultra small base station) for connections to a mobile phone network includes a fixed telephone number/identification code notifying unit whereby the ultra small base station notifies the mobile phone network of an identification code and a fixed telephone number via a fixed telephone network; an information registering unit for storing fixed telephone numbers and identification codes; a spreading code/position notifying unit that obtains the installation position of the ultra small base station from the fixed telephone number and informs the ultra small base station of the installation position together with spreading codes and positions of nearby base stations, from the mobile phone network via the fixed telephone network; a spreading code allocating unit that, based on the spreading codes and positions of nearby base stations and the position of the ultra small base station, allocates to the ultra small base station, a spreading code that is not in use by base stations adjacent to the ultra small base station; and an allocated spread code notifying unit that informs the mobile phone network of the spreading code, from the ultra small base station via the fixed telephone network and causes the information registering unit to store the spreading code (see, e.g., Japanese Patent Application Laid-Open Publication No. 2006-261722).

However, a problem arises in that with respect to a user accessible radio base station, confirmation of whether the radio base station is connected to the correct fixed line by the user is not possible. For example, a user is able to connect a femto base station to a fixed line different from the fixed line subject to the contract made with a provider at the time of introduction of the femto base station. Therefore, the femto base station may be connected to a fixed line not intended by the provider.

EP1775976A1 discloses a method for enabling a first base station to be included within a wireless cellular network, the wireless cellular network comprising a server, a plurality of second base stations and a telecommunication network linking the base stations and the server, the base stations managing cells. The first base station transfers a first message comprising at least an identifier of the first base station and information representative of the location of the first base station to the server, receives from the server a second message comprising an identifier of a second base station which manages a cell which is neighbour of a cell of the first base station and a certificate proving that the first base station is authorized to communicate with the second base station, transfers to the second base station a third message comprising the certificate in order to establish a communication with the second base station.

### SUMMARY

It would be desirable to solve, or at least ameliorate the above problems in the conventional technologies.

According to an aspect of the invention, a communication server for use in a communication system, communicates with a radio base station capable of being connected to a fixed line by a user. The communication server includes a receiving unit that receives from the radio base station, station identification information identifying the radio base station and line identification information; characterized by: said line identification identifying a fixed line to which the radio base station is connected, an acquiring unit that acquires authentication information from another communication apparatus in the communication system indicating preliminarily set correlations between the station identification information and the line identification information; a determining unit that determines whether a correlation between the station identification information and the line identification information received by the receiving unit coincides with a correlation indicated in the authentication information acquired by the acquiring unit; and a determination result output unit that outputs a determination result of the determining unit.

### BRIEF DESCRIPTION OF THE DRAWINGS

Various features, aspects and embodiments of the invention are described below with reference to the drawings. However, the invention is not necessarily limited to or by any of the features, aspects or embodiments described or shown. In the drawings:
FIG. 1 is a block diagram of a communication system according to a first embodiment;
FIG. 2 is a block diagram of a variation of a radio base station depicted in FIG. 1;
FIG. 3 is a block diagram of a communication system according to a second embodiment;
FIG. 4 is a block diagram of a communication system according to a third embodiment;
FIG. 5 is a sequence diagram of a first operation example of the communication system depicted in FIG. 4;
FIG. 6 is a sequence diagram of a second operation example of the communication system depicted in FIG. 4;
FIG. 7 is a sequence diagram of a third operation example of the communication system depicted in FIG. 4;
FIG. 8 is a block diagram of an exemplary configuration of a femto base station depicted in FIG. 4;
FIG. 9 depicts a default setting of the femto base station depicted in FIG. 8;
FIG. 10 is a flowchart of an example of operation of a communication unit of the femto base station depicted in FIG. 8;
FIG. 11 is a block diagram of an exemplary configuration of an authentication GW depicted in FIG. 4;
FIG. 12 depicts an example of a table stored in a storage unit depicted in FIG. 11;
FIG. 13 is a flowchart of an example of operation of a communication unit of the authentication GW depicted in FIG. 11;
FIG. 14 is a sequence diagram of an operation example of the communication system depicted in FIG. 4;
FIG. 15 is a block diagram of a communication system according to a fourth embodiment;
FIG. 16 depicts default settings of a femto base station and a BBR depicted in FIG. 15;
FIG. 17 is a flowchart of an example of operation of the BBR depicted in FIG. 15;
FIG. 18 is a flowchart of an example of operation of the femto base station depicted in FIG. 15;
FIG. 19 is a flowchart of an example of operation of a communication unit of the authentication GW depicted in FIG. 15;
FIG. 20A is a sequence diagram (part one) of an operation example of the communication system depicted in FIG. 15;
FIG. 20B is a sequence diagram (part two) of an operation example of the communication system depicted in FIG. 15;
FIG. 21 is a block diagram of a communication system according to a fifth embodiment;
FIG. 22 depicts an example of a table stored in an authentication server of an ISP network depicted in FIG. 21;
FIG. 23 depicts an example of a table stored in the authentication server of a mobile communication provider network depicted in FIG. 21;
FIG. 24 is a sequence diagram of a first operation example of the communication system depicted in FIG. 21;
FIG. 25 is a sequence diagram of a second operation example of the communication system depicted in FIG. 21; and
FIG. 26 is a sequence diagram of a third operation example of the communication system depicted in FIG. 21.

### DETAILED DESCRIPTION

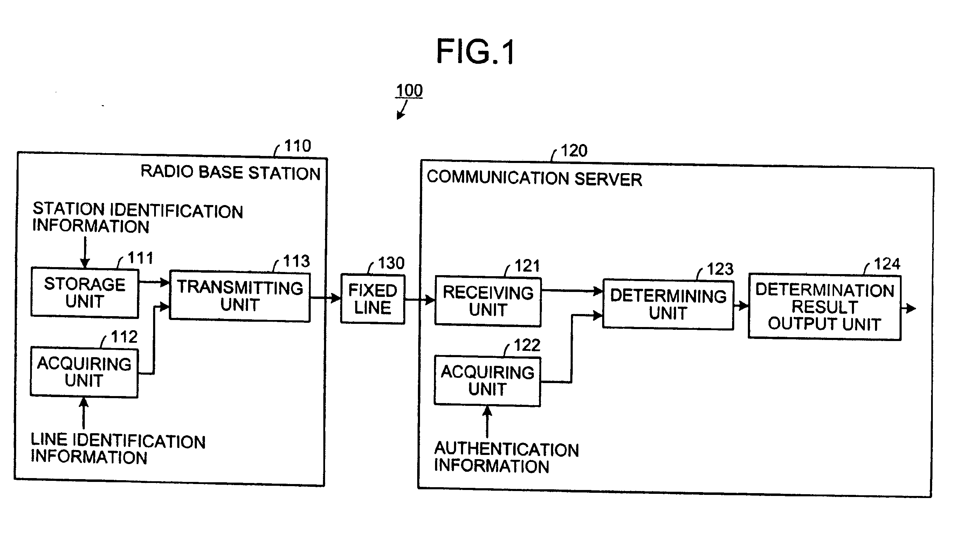

FIG. 1 is a block diagram of a communication system according to a first embodiment. As depicted in FIG. 1, a communication system 100 according to the first embodiment includes a radio base station 110 and a communication server 120. A fixed line 130 is a fixed communication line established for a household or an office, for example.

The fixed line 130 is a communication line such as a telephone line, an integrated services digital network (ISDN) line, an ADSL line, a community antenna television (CATV) line, fiber-to-the-home (FTTH), etc.

The radio base station 110 is a base station connectable to the fixed line 130 through a user operation. For example, at the time of purchase of a radio base station 110, the user registers, with a mobile communication provider, the fixed line 130 (e.g., a residential or office communication line) to which the radio base station 110 is to be connected.

Thereby, the radio base station 110 is connected to the fixed line 130 and communication is performed through the fixed line 130 between the radio base station 110 and the communication server 120. The radio base station 110 includes a storage unit 111, an acquiring unit 112, and a transmitting unit 113. The storage unit 111 stores station identification information identifying the radio base station 110.

The station identification information is stored to the storage unit 111 at the time of manufacturing or at the sale of the radio base station 110, for example. Alternatively, the station identification information is stored to the storage unit 111 by the user when setting the radio base station 110. The station identification information is a media access control (MAC) address allocated to the radio base station 110, for example.

The acquiring unit 112 acquires line identification information identifying the fixed line 130 to which the radio base station 110 is connected. The acquiring unit 112 outputs the acquired line identification information to the transmitting unit 113. The line identification information includes a user ID identifying the user of the fixed line 130, a password correlated with the user ID, and the identification number of the fixed line 130, for example.

For example, the line identification information may be stored to a memory (not depicted) of the radio base station 110 in advance and the acquiring unit 112 may read the line identification information stored in the memory to acquire the line identification information. Alternatively, the acquiring unit 112 may acquire the line identification information from the fixed line 130 to which the radio base station 110 is actually connected.

The transmitting unit 113 reads the station identification information stored in the storage unit 111 and transmits to the communication server 120, the read station identification information and the line identification information output from the acquiring unit 112. The transmitting unit 113 transmits the station identification information and the line identification information to the communication server 120 at the start of communication with the communication server 120, for example.

For example, the transmitting unit 113 transmits the station identification information and the line identification information through the fixed line 130 indicated by the line identification information output from the acquiring unit 112. Therefore, for example, if the acquiring unit 112 acquires the line identification information of a fixed line different from the fixed line 130 due to a fraudulent act of a user, the transmitting unit 113 becomes unable to transmit the station identification information and the line identification information through the fixed line 130, thereby ensuring that the line identification information received by the communication server 120 is the line identification information of the fixed line 130 to which the radio base station 110 is actually connected.

The communication server 120 includes a receiving unit 121, an acquiring unit 122, a determining unit 123, and a determination result output unit 124. The receiving unit 121 receives the station identification information and the line identification information from the radio base station 110 and outputs the received station identification information and line identification information to the determining unit 123. The transmitting unit 113 receives the station identification information and the line identification information from the radio base station 110 at the start of communication with the radio base station 110, for example.

The acquiring unit 122 acquires authentication information indicating preliminarily set correlations between the station identification information and the line identification information and outputs the acquired authentication information to the determining unit 123. For example, the acquiring unit 122 receives the authentication information from another communication apparatus storing the authentication information to thereby acquire the authentication information. Alternatively, the authentication information may be stored in a memory (not depicted) of the communication server 120 in advance and the acquiring unit 122 may read the authentication information stored in the memory to thereby acquire the authentication information.

The determining unit 123 determines whether the station identification information and the line identification information that are correlated and output from the receiving unit 121 coincide with those correlated in the authentication information output from the acquiring unit 122. The determining unit 123 outputs the result of determination to the determination result output unit 124. The determination result output unit 124 outputs the determination result received from the determining unit 123.

For example, if the determination result output unit 124 outputs a determination result indicating "coincides", it is known that the fixed line 130 connected to the radio base station 110 is the fixed line preliminarily correlated with the radio base station 110. If the determination result output unit 124 outputs a determination result indicating "does not coincide", it is known that the fixed line 130 connected to the radio base station 110 is a fixed line not preliminarily correlated with the radio base station 110.

The acquiring unit 112 may acquire the line identification information identifying the fixed line connected to the radio base station 110 each time the radio base station 110 is connected to a fixed line (e.g., the fixed line 130). The transmitting unit 113 transmits the line identification information and the station identification information acquired by the acquiring unit 112 each time the acquiring unit 112 acquires the line identification information.

This enables the receiving unit 121 of the communication server 120 to receive the station identification information and the line identification information each time the radio base station 110 is connected to a fixed line. Therefore, for example, if the radio base station 110 is disconnected from the fixed line 130 and connected to another fixed line due to a fraudulent act of a user, the line identification information indicative of the newly connected fixed line and the station identification information are transmitted to the communication server 120.

The radio base station 110 depicted in FIG. 1 may be implemented by a communication system including multiple communication apparatuses communicable with each other. For example, the radio base station 110 may be implemented by a femto base station including the storage unit 111, and a broadband router including the acquiring unit 112 and the transmitting unit 113.

In this case, the station identification information stored in the storage unit 111 is transmitted to the broadband router through a communication cable. The acquiring unit 112 acquires the line identification information of the fixed line connected to the broadband router. The communication server 120 depicted in FIG. 1 may be implemented by a communication system including multiple communication apparatuses communicable with each other.

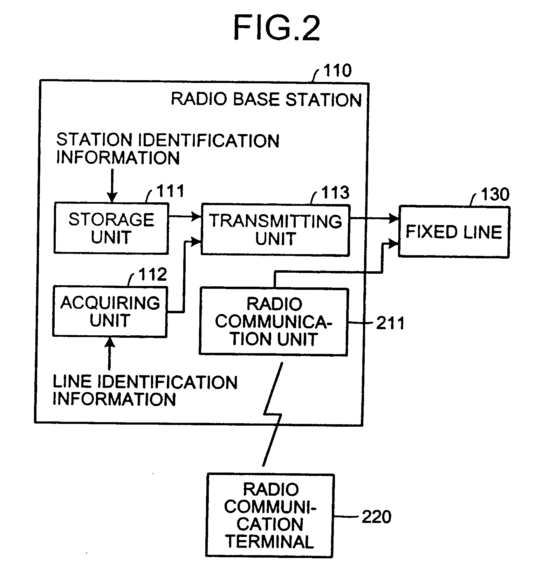

FIG. 2 is a block diagram of a variation of the radio base station depicted in FIG. 1. As depicted in FIG. 2, the radio base station 110 may include a radio communication unit 211 in addition to the configuration depicted in FIG. 1. The radio communication unit 211 performs radio communication with a radio communication terminal 220 near the radio base station 110 to relay the communication between the radio communication terminal 220 and a network. The radio communication terminal 220 is a mobile terminal such as a mobile phone, for example.

For example, the radio base station 110 is a femto base station for implementing a femtocell. The network by which the radio communication terminal 220 communicates through the relay by the radio communication unit 211 is a mobile communication provider network or another network connected to the mobile communication provider network, for example. The radio communication unit 211 may relay the communication between the radio communication terminal 220 and the network through the fixed line 130 or through a line other than the fixed line 130.

In the communication system 100 according to the first embodiment, the station identification information and the line identification information are transmitted from the radio base station 110 to the communication server 120 and the communication server 120 authenticates the correlated station identification information and line identification information as described above. This enables the communication server 120 to check whether the radio base station 110 is connected to the correct fixed line (the fixed line preliminarily correlated with the radio base station 110) by a user. Thus, for example, a provider may know when the radio base station 110 is connected to a fixed line not in the contract with a user.

By transmitting the station identification information and the line identification information from the radio base station 110 to the communication server 120 at the start of communication between the radio base station 110 and the communication server 120, rapid detection of a connection of the radio base station 110 to an unauthorized fixed line by a user is enabled. Therefore, for example, a user connecting the radio base station 110 to an unauthorized line, the use of a stolen radio base station 110, etc. is quickly detected.

Each time the radio base station 110 is connected to a fixed line, the radio base station 110 may transmit to the communication server 120, the line identification information indicative of the fixed line to which the radio base station 110 is connected and the station identification information. This enables the communication server 120 to quickly detect when the radio base station 110 is disconnected from the fixed line 130 and connected to another fixed line due to a fraudulent act of a user, for example.

Regulations for Telecommunications Facilities for Telecommunications Business prescribe that a mobile phone provider must inform the police, etc., of emergency notification positional information. For example, if positional information of a mobile phone is identifiable using a global positioning system (GPS) utilizing satellites, the information is to be supplied to an emergency notification agency.

On the other hand, since a mobile terminal located indoors within a residence or an office is unable to receive signals from the GPS satellites, it is difficult to acquire the positional information even if the terminal has a GPS function. Therefore, for example, if an emergency call connection request is transmitted to an emergency notification agency from a mobile terminal located indoors, the emergency notification agency is unable to identify the position of the mobile terminal.

A second embodiment provides a communication system capable of externally identifying the position of a mobile terminal that performs radio communication with a radio base station such as a femto base station.

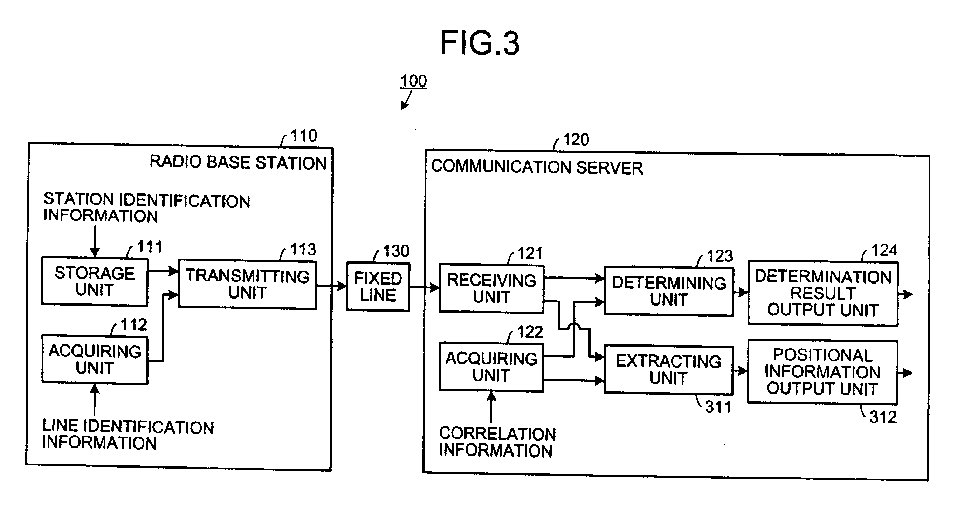

FIG. 3 is a block diagram of a communication system according to the second embodiment. In FIG. 3, constituent elements similar to those depicted in FIG. 1 are given the reference numerals used in FIG. 1 and will not be described. As depicted in FIG. 3, the communication server 120 of the second embodiment includes an extracting unit 311 and a positional information output unit 312 in addition to the configuration depicted in FIG. 1. The receiving unit 121 outputs the received station identification information to the extracting unit 311.

The acquiring unit 122 acquires correlation information indicating preliminarily set correlations between the station identification information and positional information indicating the connecting position of a radio base station (e.g., the radio base station 110) on the fixed line 130 and outputs the acquired correlation information to the extracting unit 311. The connecting position of the radio base station on the fixed line 130 is, for example, a position of a port provided on the fixed line 130 and connectable to the radio base station.

For example, the acquiring unit 122 receives the correlation information from another communication apparatus storing the correlation information to thereby acquire the correlation information. Alternatively, the correlation information is stored to a memory (not depicted) of the communication server 120 in advance and the acquiring unit 122 reads the correlation information stored in the memory to acquire the correlation information.

From the correlation information output from the acquiring unit 122, the extracting unit 311 extracts the correlation information correlated with the station identification information output from the receiving unit 121. The extracting unit 311 outputs the extracted correlation information to the positional information output unit 312. The positional information output unit 312 outputs the correlation information received from the extracting unit 311.

Although the receiving unit 121 outputs the station identification information to the extracting unit 311 in the configuration described, configuration is not limited hereto. For example, the receiving unit 121 may be configured to output the line identification information to the extracting unit 311. The acquiring unit 122 acquires correlation information indicating preliminarily set correlations between the line identification information and the positional information indicating the connecting position of the radio base station 110 on the fixed line 130. From the correlation information output from the acquiring unit 122, the extracting unit 311 extracts the correlation information correlated with the line identification information output from the receiving unit 121.

Alternatively, the receiving unit 121 may be configured to output the station identification information and the line identification information to the extracting unit 311. The acquiring unit 122 acquires correlation information indicating preliminarily set correlations between the station identification information and the line identification information together with the positional information indicative of the connecting position of the radio base station 110 on the fixed line 130. From the correlation information output from the acquiring unit 122, the extracting unit 311 extracts the correlation information correlated with the station identification information and the line identification information output from the receiving unit 121.

The radio base station 110 has a configuration similar to that depicted in FIG. 1 or 2. For example, if the radio base station 110 has the configuration depicted in FIG. 2, a transmitting unit may be included that transmits to a destination of a call connection request, the positional information output from the positional information output unit 312 when the call connection request is transmitted from the radio communication terminal 220 through the radio base station 110. This enables the communication apparatus at the destination of the call connection request to identify the position of the radio base station 110 based on the positional information transmitted from the communication server 120.

Since the radio communication terminal 220 and the radio base station 110 are in a communicable state, if the call connection request from the radio communication terminal 220 is transmitted through the radio base station 110, it is known that the radio communication terminal 220 is located near the radio base station 110. Therefore, the communication apparatus at the destination of the call connection request is capable of identifying the position of the radio communication terminal 220 that is the source of the call connection request, based on the positional information transmitted from the communication server 120.

The communication system 100 according to the second embodiment achieves an effect similar to that of the communication system 100 according to the first embodiment and extracts the positional information correlated with the station identification information, etc., from the correlation information as described. This enables the position of the radio base station 110 to be identified. Identifying the position of the radio base station 110 enables the identification of the position of the radio communication terminal 220 that is wirelessly communicating with the radio base station 110.

For example, if a call connection request is transmitted from the radio communication terminal 220 through the radio base station 110, the positional information extracted by the extracting unit 311 is transmitted to the destination of the call connection request. This enables the communication apparatus at the destination of the call connection request to identify the position of the radio communication terminal 220 based on the positional information transmitted from the communication server 120. Therefore, the position of the radio communication terminal 220 is identifiable even if the radio communication terminal 220 has no GPS function or if the GPS function is unavailable due to the radio communication terminal 220 being located indoors.

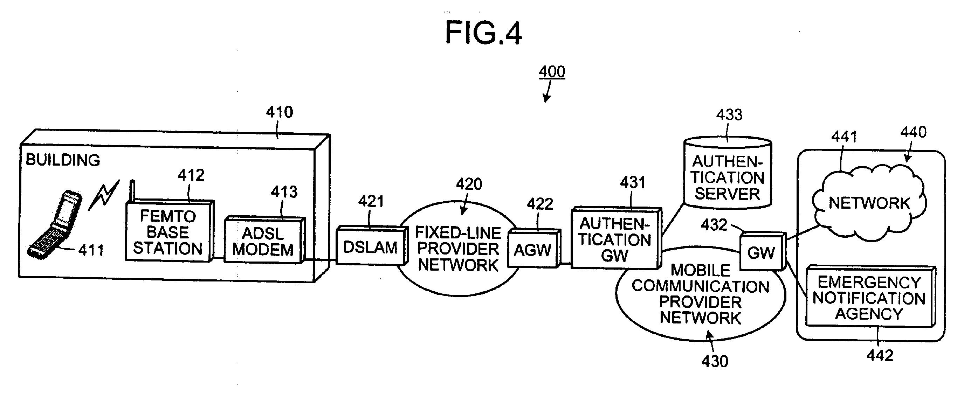

FIG. 4 is a block diagram of a configuration of a communication system according to a third embodiment. As depicted in FIG. 4, a communication system 400 includes a building 410, a fixed-line provider network 420, and a mobile communication provider network 430. The mobile communication provider network 430 is connected to a network 440 including the Internet 441 and an emergency notification agency 442.

A femto base station 412 and an ADSL modem 413 are provided within the building 410. A mobile terminal 411 performs radio communication with the femto base station 412. The mobile terminal 411 connects, through the femto base station 412, to the fixed-line provider network 420, the mobile communication provider network 430, and the network 440.

The femto base station 412 is a base station connectable to a fixed line by a user operation. For example, the femto base station 412 is connectable to a fixed line provided from the fixed-line provider network 420 when connected to a port of the ADSL modem 413. The femto base station 412 is connected to the ADSL modem 413 through Fast Ether, for example.

The femto base station 412 performs radio communication with the mobile terminal 411. The femto base station 412 communicates with the mobile terminal 411 through the IMT-2000 protocol defined by 3GPP (registered trademark), for example. The femto base station 412 relays communication between the mobile terminal 411 and another terminal in cooperation with communication apparatuses in the fixed-line provider network 420 and the mobile communication provider network 430.

The ADSL modem 413 is connected to the fixed-line provider network 420 through the ADSL protocol. The ADSL modem 413 makes conversion between the Ethernet (registered trademark) protocol used by the femto base station 412 and the ADSL protocol used by the fixed-line provider network 420 to relay communication between the femto base station 412 and the fixed-line provider network 420.

The fixed-line provider network 420 includes a DSLAM 421 and an AGW 422. The DSLAM 421 is provided in a station house, etc., of the fixed-line provider network 420 to accommodate multiple ADSL subscriber lines into the fixed-line provider network 420. For example, the DSLAM 421 accommodates the fixed line connected with the ADSL modem 413 into the fixed-line provider network 420.

The AGW 422 is connected to the mobile communication provider network 430. The AGW 422 relays communication between the fixed-line provider network 420 and the mobile communication provider network 430. The AGW 422 operates as a point-to-point protocol over ethernet (PPPoE) server. The AGW 422 establishes a PPPoE session with the femto base station 412.

The mobile communication provider network 430 includes an authentication GW 431, a GW 432, and an authentication server 433. The authentication GW 431 is the communication server 120 depicted in FIG. 1 or 3, for example. The authentication GW 431 controls and relays the communication with the femto base station 412 and the mobile terminal 411. The authentication GW 431 performs user authentication when the mobile terminal 411 or the femto base station 412 communicates with the network 440.

The GW 432 is connected to the network 440. The GW 432 controls and relays the communication between the mobile communication provider network 430 and the network 440.

The authentication server 433 stores authentication information indicating preliminarily set correlations between the station identification information and the line identification information, such as authentication information indicating the correlation of the station identification information of the femto base station 412 and the line identification information of the fixed line to which the femto base station 412 is to be connected according to a preliminary contract, etc. The authentication server 433 transmits the authentication information to the authentication GW 431 in response to an authentication information request from the authentication GW 431.

The authentication server 433 may store the station identification information and the line identification information as well as positional information indicative of a connecting position of a femto base station (e.g., the femto base station 412) on the fixed line indicated by the line identification information. The positional information is information determined when a fixed line is disposed at a residence or an office. The authentication server 433 transmits the correlation information to the authentication GW 431 in response to a correlation information request from the authentication GW 431.

The network 440 includes the Internet 441 and the emergency notification agency 442. The emergency notification agency 442 is a communication apparatus that receives emergency notifications from the mobile terminal 411 and various communication terminals such as fixed-line phones. The emergency notification agency 442 is a communication apparatus of an agency that receives emergency notifications to the police, the fire department, and other emergency service providers, for example. The emergency notification agency 442 is connected to the authentication GW 431 of the mobile communication provider network 430. For example, the emergency notification agency 442 receives emergency notification from the mobile terminal 411 through the mobile communication provider network 430.

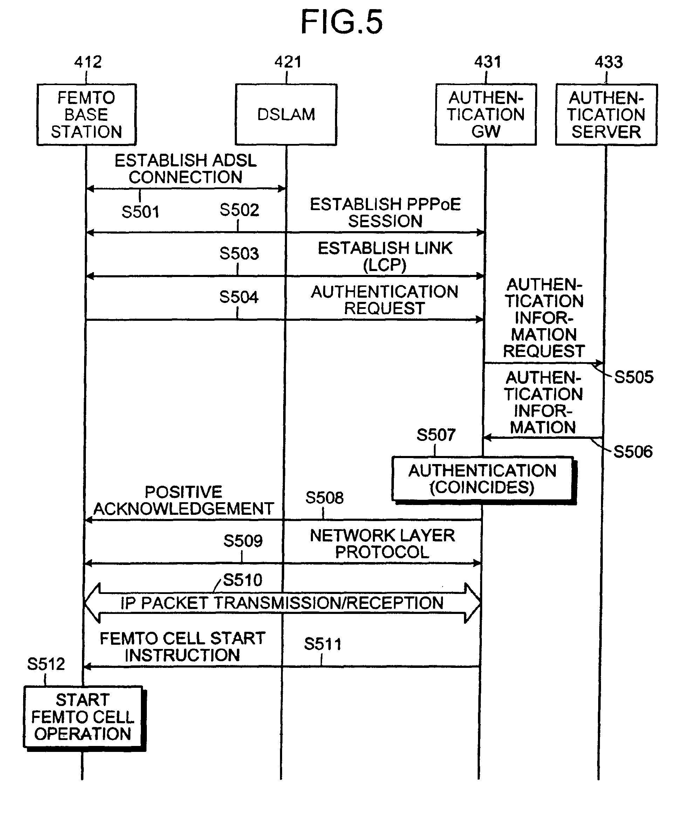

FIG. 5 is a sequence diagram of a first operation example of the communication system depicted in FIG. 4. First, the femto base station 412 establishes an ADSL connection with the DSLAM 421 (step S501). The femto base station 412 connects to the authentication GW 431 through the DSLAM 421, and establishes a PPPoE session with the authentication GW 431 (step S502).

The femto base station 412 then establishes a link control protocol (LCP) link with the authentication GW 431 (step S503). The femto base station 412 transmits an authentication request to the authentication GW 431 (step S504). The authentication request transmitted at step S504 includes the station identification information of the femto base station 412 and the line identification information identifying the fixed line connected to the femto base station 412.

The authentication GW 431 transmits an authentication information request to the authentication server 433 (step S505). The authentication server 433 transmits the authentication information to the authentication GW 431 (step S506). The authentication GW 431 determines whether the station identification information and the line identification information that are correlated in the authentication request transmitted at step S504 coincide with those correlated in the authentication information transmitted at step S506 (step S507).

In the example depicted in FIG. 5, the correlated station identification information and line identification information coincide with those correlated in the authentication information. The authentication GW 431 transmits a positive acknowledgment to the femto base station 412 (step S508). The femto base station 412 and the authentication GW 431 establish a point-to-point (PPP) session through a network layer protocol (step S509).

At step S509, for example, the authentication GW 431 notifies the femto base station 412 of an IP address allocated to the femto base station 412. The authentication GW 431 stores, correlated with the authentication information transmitted at step S506, the IP address allocated to the femto base station 412. The femto base station 412 sets the IP address provided from the authentication GW 431 as the IP address of the femto base station 412.

The femto base station 412 and the authentication GW 431 then begin to communicate IP packets with each other (step S510). The authentication GW 431 transmits to the femto base station 412 using an IP packet, a femtocell start instruction indicating that the operation of a femtocell is to be started (step S511). The femto base station 412 starts the operation of the femtocell (step S512), and a series of operations is terminated. For example, the femto base station 412 starts the operation of relaying the communication between the mobile terminal 411 and the mobile communication provider network 430.

At step S505, the authentication GW 431 may transmit the authentication information request to the authentication server 433 along with the station identification information included in the authentication request. The authentication server 433 receives the authentication information request along with the station identification information to extract from the authentication information, the line identification information correlated with the received station identification information.

The authentication server 433 transmits the extracted line identification information as the authentication information to the authentication GW 431. At step S507, the authentication GW 431 determines whether the line identification information received from the authentication server 433 coincides with the line identification information included in the authentication request transmitted at step S504.

Alternatively, at step S505, the authentication GW 431 may transmit the authentication information request to the authentication server 433 along with the line identification information included in the authentication request. The authentication server 433 receives the authentication information request along with the line identification information to extract from the authentication information, the station identification information correlated with the received line identification information.

The authentication server 433 transmits the extracted station identification information, as the authentication information, to the authentication GW 431. At step S507, the authentication GW 431 determines whether the station identification information received from the authentication server 433 coincides with the station identification information included in the authentication request transmitted at step S504.

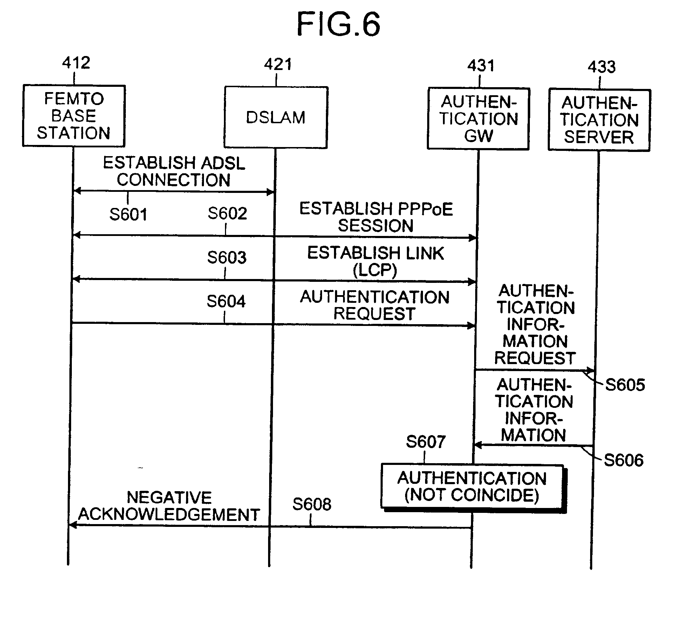

FIG. 6 is a sequence diagram of a second operation example of the communication system depicted in FIG. 4. Steps S601 to S607 depicted in FIG. 6 are similar to the steps S501 to S507 depicted in FIG. 5 and therefore will not be described. At step S607, in this example, it is assumed that the station identification information and the line identification information correlated in the authentication request do not coincide with those correlated in the authentication information.

When the station identification information and the line identification information do not coincide with those correlated in the authentication information, the authentication GW 431 transmits a negative acknowledgment to the femto base station 412 (step S608), and a series of operations is terminated. If the authentication GW 431 transmits a negative acknowledgment to the femto base station 412, no PPP session is established between the femto base station 412 and the authentication GW 431, and the femto base station 412 does not start femtocell operation.

Therefore, the mobile terminal 411 is unable to communicate with the mobile communication provider network 430 by communications relayed through the femto base station 412. Therefore, the communication from the mobile terminal 411 through the femto base station 412 is disconnected if, for example, a user connects the femto base station 412 to an unauthorized line or if a stolen radio base station 110 is used.

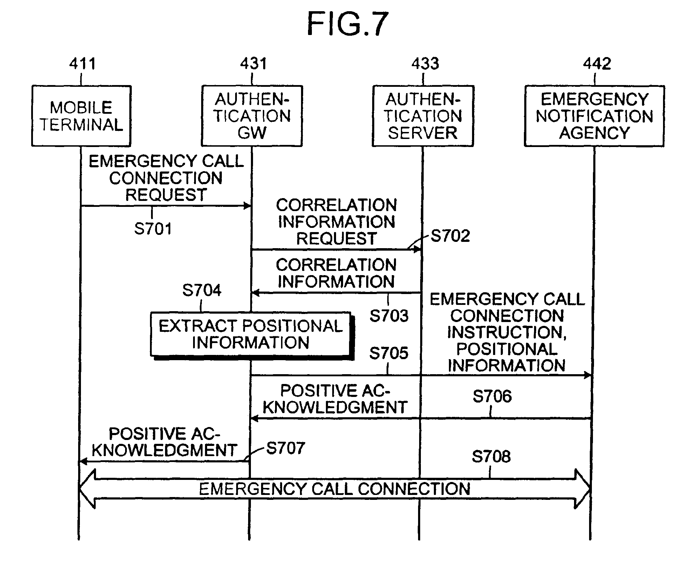

FIG. 7 is a sequence diagram of a third operation example of the communication system depicted in FIG. 4. In FIG. 7, for example, it is assumed that a PPP session is established between the femto base station 412 and the authentication GW 431, and that the mobile terminal 411 is capable of communication, relayed through the femto base station 412, with the mobile communication provider network 430 according to the first operation example depicted in FIG. 5.

First, the mobile terminal 411 transmits to the authentication GW 431, an emergency call connection request destined to the emergency notification agency 442 (step S701). Step S701 is implemented by a user operation of the mobile terminal 411, for example. The authentication GW 431 transmits to the authentication server 433, a correlation information request to indicate that the correlation information is to be transmitted (step S702).

The authentication server 433 transmits the correlation information to the authentication GW 431 (step S703). The authentication GW 431 extracts, from the correlation information transmitted at step S703, the positional information correlated with the line identification information of the femto base station 412 (step S704). The authentication GW 431 transmits an emergency call connection instruction to the emergency notification agency 442 along with the positional information extracted at step S704 (step S705).

The emergency notification agency 442 then transmits a positive acknowledgment to the authentication GW 431 (step S706). The authentication GW 431 transmits to the mobile terminal 411, the positive acknowledgment transmitted at step S706 (step S707). The mobile terminal 411 and the emergency notification agency 442 establish the emergency call connection (step S708), and a series of operations is terminated.

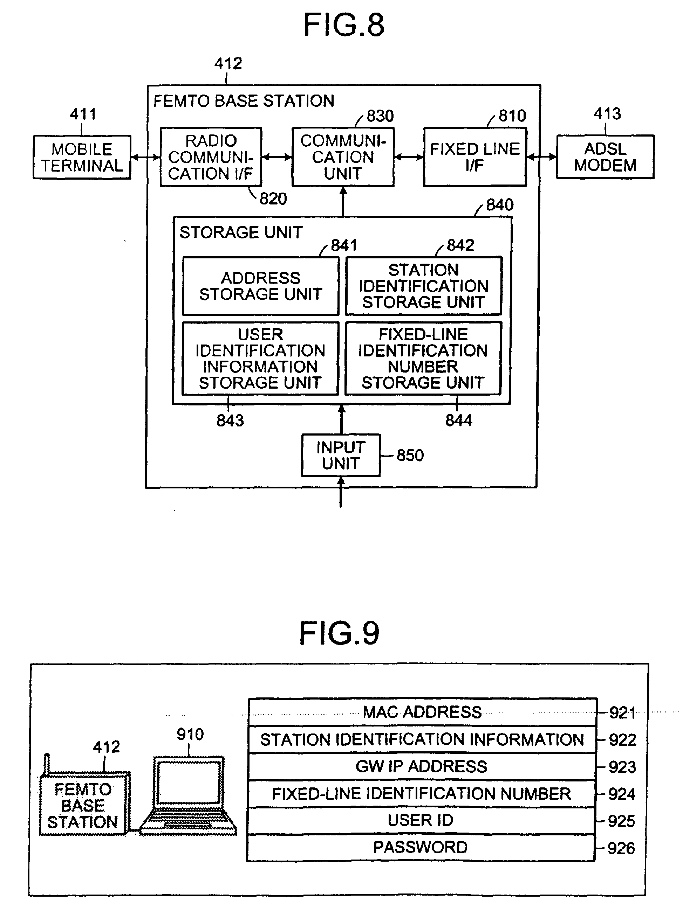

FIG. 8 is a block diagram of an exemplary configuration of the femto base station depicted in FIG. 4. As depicted in FIG. 8, the femto base station 412 (see FIG. 4) includes a fixed line I/F 810, a radio communication I/F 820, a communication unit 830, a storage unit 840, and an input unit 850.

The fixed line I/F 810 is an interface that performs communication with the ADSL modem 413. By connecting the fixed line I/F 810 to a port of the ADSL modem 413, the femto base station 412 may be connected to the fixed line provided by the fixed-line provider network 420. The radio communication I/F 820 is an interface that performs radio communication with the mobile terminal 411.

The communication unit 830 performs communication through the fixed line I/F 810 with the mobile communication provider network 430. The communication unit 830 performs communication through the radio communication I/F 820 with the mobile terminal 411. The communication unit 830 relays communication between the mobile terminal 411 and the mobile communication provider network 430 through the fixed line I/F 810 and the radio communication I/F 820.

The storage unit 840 includes an address storage unit 841, a user identification information storage unit 843, a station identification storage unit 842, and a fixed-line identification number storage unit 844. The address storage unit 841 stores, for example, the MAC address and IP address allocated to the femto base station 412, MAC addresses and IP addresses of communication destinations, and correlations thereof.

The station identification storage unit 842 stores the station identification information such as the MAC address identifying the femto base station 412. The user identification information storage unit 843 stores a user ID identifying a user of the fixed line to be connected to the femto base station 412 and a password preliminarily correlated with the user ID, for example. The fixed-line identification number storage unit 844 stores, for example, a fixed-line identification number indicative of the fixed line to be connected to the femto base station 412.

The input unit 850 is an interface that inputs various types of information from an external source. For example, the input unit 850 is connectable with a personal computer (PC) of a setter of the femto base station 412 and various types of information may be input to the input unit 850 via the PC. Various types of information input through the input unit 850 are stored in the storage unit 840.

FIG. 9 depicts a default setting of the femto base station depicted in FIG. 8. For example, a PC 910 is connected to the input unit 850 of the femto base station 412 and the default setting of the femto base station 412 is set via the connected PC 910. For example, a MAC address 921, station identification information 922, a GW IP address 923, a fixed-line identification number 924, a user ID 925, and a password 926 are input via the PC 910 through the input unit 850.

The information input via the PC 910 through the input unit 850 is stored in the storage unit 840 of the femto base station 412. The MAC address 921 is a global MAC address allocated to the femto base station 412. The MAC address 921 is stored in the address storage unit 841 of the storage unit 840. The MAC address 921 may be stored as the station identification information in the station identification storage unit 842 of the storage unit 840.

The station identification information 922 is a number uniquely identifying the femto base station 412, for example. The station identification information 922 is stored in the station identification storage unit 842 of the storage unit 840. The GW IP address 923 is an IP address allocated to the authentication GW 431. The GW IP address 923 is stored in the address storage unit 841 of the storage unit 840. The fixed-line identification number 924 is an identification number of the fixed line to be connected to the femto base station 412, for example. The fixed-line identification number 924 is stored in the fixed-line identification number storage unit 844 of the storage unit 840.

The user ID 925 is an ID that identifies a user of the fixed line to be connected to the femto base station 412. The user ID 925 is stored in the user identification information storage unit 843 of the storage unit 840. The password 926 is a password correlated with the user ID 925 in the fixed-line provider network 420 and the mobile communication provider network 430, for example. The password 926 is stored in the user identification information storage unit 843 of the storage unit 840.

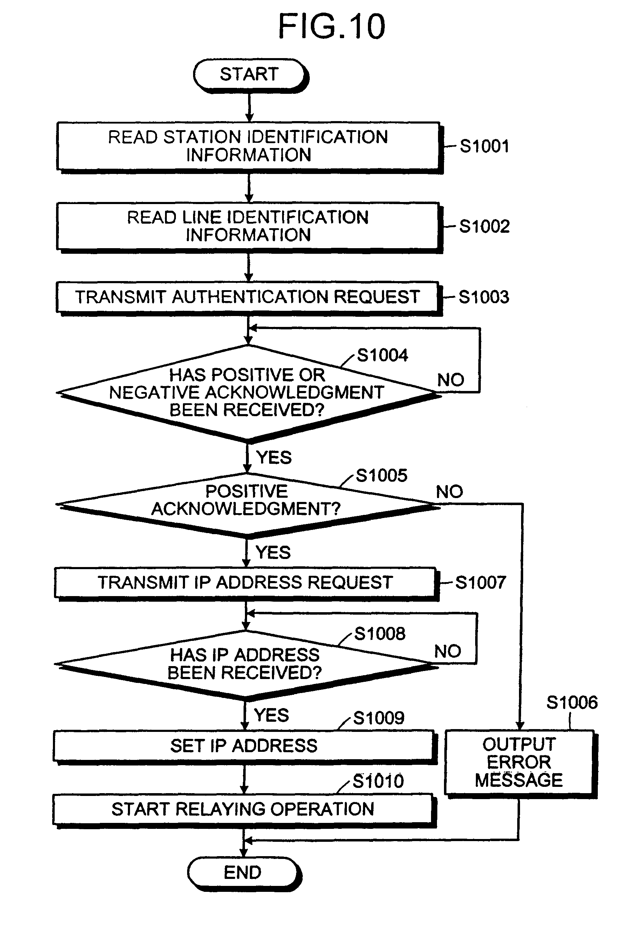

FIG. 10 is a flowchart of an example of the operation of the communication unit of the femto base station depicted in FIG. 8. In FIG. 10, it is assumed that the default setting of the femto base station 412 depicted in FIG. 9 has been performed. First (START), the communication unit 830 of the femto base station 412 reads the station identification information stored in the station identification storage unit 842 (step S1001). The communication unit 830 reads the line identification information stored in the storage unit 840 (step S1002).

At step S1002, for example, the communication unit 830 reads, as the line identification information, the fixed-line identification number 924 stored in the fixed-line identification number storage unit 844, and the user ID 925 and the password 926 stored in the user identification information storage unit 843.

An authentication request is transmitted from the fixed line I/F 810 to the authentication GW 431 and includes the station identification information read at step S1001 and the line identification information read at step S1002 (step S1003). At step S1003, for example, the communication unit 830 reads the GW IP address 923 from the address storage unit 841 and transmits the authentication request to the read GW IP address 923 as the destination.

It is then determined whether a positive or a negative acknowledgment has been received from the authentication GW 431 through the fixed line I/F 810 for the authentication request transmitted at step S1003 (step S1004), and the operation waits until the reception (step S1004: NO). If an acknowledgment has been received (step S1004: YES), it is determined whether the received acknowledgment is a positive acknowledgment (step S1005).

If the received acknowledgment is a negative acknowledgment at step S1005 (step S1005: NO), an error message is output (step S1006), and a series of operations is terminated (END). At step S1006, for example, a user I/F (not depicted) of the femto base station 412 outputs the error message to a user.

If the received acknowledgment is a positive acknowledgment at step S1005 (step S1005: YES), an IP address request is transmitted from the fixed line I/F 810 to the authentication GW 431, requesting an IP address (step S1007). It is then determined whether the IP address has been received from the authentication GW 431 through the fixed line I/F 810 (step S108), and the operation waits until the reception (step S1008: NO).

When the IP address has been received at step S1008 (step S1008: YES), the received IP address is set as the IP address of the femto base station 412 (step S1009). For example, the received IP address is stored to the address storage unit 841 as the IP address of the femto base station 412. The relaying operation is started for the communication between the mobile terminal 411 and the mobile communication provider network 430 (step S1010), and a series of operations is terminated (END).

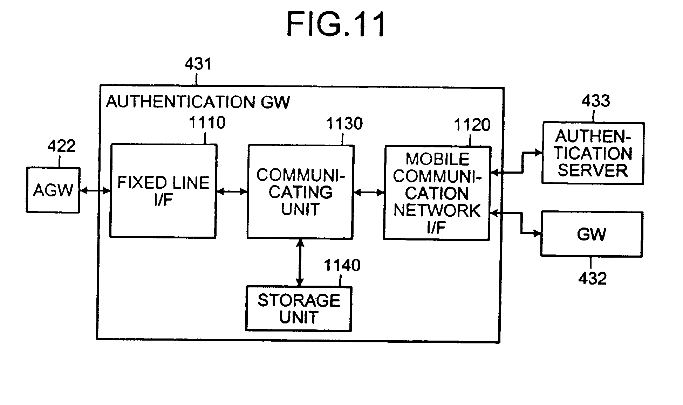

FIG. 11 is a block diagram of an exemplary configuration of the authentication GW depicted in FIG. 4. As depicted in FIG. 11, the authentication GW 431 includes a fixed line I/F 1110, a mobile communication network I/F 1120, a communication unit 1130, and a storage unit 1140. The fixed line I/F 1110 is an interface that performs communication with the AGW 422. The mobile communication network I/F 1120 is an interface that performs communication with the authentication server 433 and the GW 432.

The communication unit 1130 communicates with the fixed-line provider network 420 through the fixed line I/F 1110. The communication unit 1130 communicates with the GW 432 through the mobile communication network I/F 1120. The communication unit 1130 relays communication between the mobile terminal 411 and the mobile communication provider network 430 through the fixed line I/F 1110 and the mobile communication network I/F 1120.

The storage unit 1140 stores the authentication information correlating the station identification information and the line identification information. The storage unit 1140 stores the correlation information correlating at least one of the station identification information and the line identification information with the positional information. For example, the storage unit 1140 stores a table correlating the line identification information, the station identification information, and the positional information.

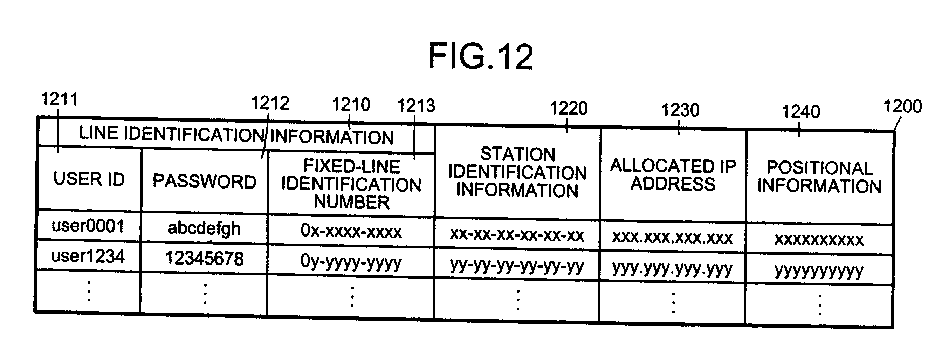

FIG. 12 depicts an example of a table stored in the storage unit depicted in FIG. 11. The storage unit 1140 (see FIG. 11) of the authentication GW 431 stores, for example, a table 1200 depicted in FIG. 12 as a table for managing the authentication information and the correlation information. Line identification information 1210, station identification information 1220, allocated IP addresses 1230, and positional information 1240 are correlated in the table 1200.

The line identification information 1210 includes user IDs 1211, passwords 1212, and fixed-line identification numbers 1213. The line identification information 1210 and the positional information 1240 are information determined when a fixed line is disposed at a residence or an office of a user of the femto base station 412. The fixed-line identification number 1213 is a telephone number if the disposed fixed line is a telephone line, for example. The positional information 1240 is information indicative of the latitude/longitude or the address of a residence or office having the fixed line.

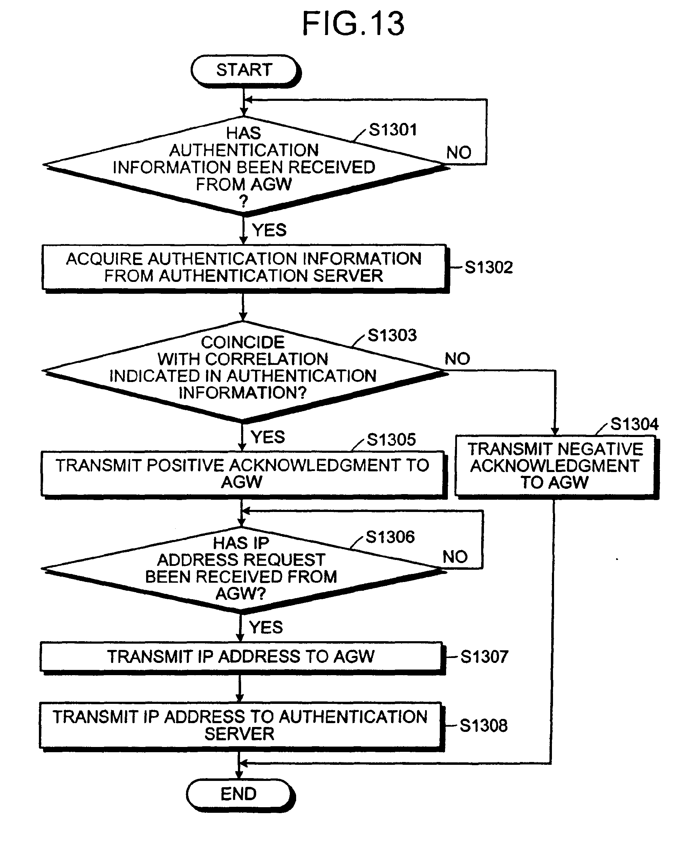

FIG. 13 is a flowchart of an example of the operation of the communication unit of the authentication GW depicted in FIG. 11. First (START), the communication unit 1130 of the authentication GW 431 determines whether an authentication request transmitted from the femto base station 412 has been received from the AGW 422 (step S1301). The operation waits until the authentication request transmitted from the femto base station 412 has been received (step S1301: NO).

When the authentication request is received at step S1301 (step S1301: YES), the authentication information is acquired from the authentication server 433 (step S1302). At step S1302, for example, it is assumed that the table 1200 depicted in FIG. 12 is stored in the authentication server 433. The communication unit 1130 receives the table 1200 from the authentication server 433 and stores the received authentication information into the storage unit 1140.

It is then determined whether the station identification information and the line identification information correlated in the authentication request acquired at step S1301 coincide with those correlated in the authentication information acquired at step S1302 (step S1303). For example, the station identification information 1220 and the corresponding line identification information 1210 are read from the table 1200 stored in the storage unit 1140. It is determined whether the read station identification information 1220 and line identification information 1210 coincide with the station identification information and the line identification information correlated in the authentication request.

If the read station identification information 1220 and the line identification information 1210 do not coincide with those correlated in the acquired authentication information at step S1303 (step S1303: NO), a negative acknowledgment to the femto base station 412 is transmitted to the AGW 422 (step S1304), and a series of operations is terminated (END). The negative acknowledgment transmitted to the AGW 422 is relayed by the AGW 422 and transmitted to the femto base station 412.

If the read station identification information 1220 and line identification information 1210 coincide with those correlated in the acquired authentication information at step S1303 (step S1303: YES), a positive acknowledgment to the femto base station 412 is transmitted to the AGW 422 (step S1305). The positive acknowledgment transmitted to the AGW 422 is relayed by the AGW 422 and transmitted to the femto base station 412.

It is then determined whether an IP address request transmitted from the femto base station 412 has been received from the AGW 422 (step S1306), and the operation waits until the IP address request is received (step S1306: NO) .

When the IP address request is received at step S1306 (step S1306: YES), the IP address allocated to the femto base station 412 is transmitted to the AGW 422 (step S1307). The IP address transmitted to the AGW 422 is relayed by the AGW 422 and transmitted to the femto base station 412.

The IP address transmitted at step S1307 is then transmitted to the authentication server 433 (step S1308), and a series of operations is terminated (END). The IP address transmitted at step S1308 is registered to the authentication server 433.

For example, the authentication server 433 stores the table 1200 for the transmission to the authentication GW 431. Upon receiving the IP address of the femto base station 412 from the authentication GW 431, the authentication server 433 correlates the received IP address with the line identification information 1210 and the station identification information 1220 and stores the IP address as the allocated IP address.

Although the authentication GW 431 acquires the table 1200 as the authentication information from the authentication server 433 in the method described, the method of acquiring the authentication information is not limited hereto. For example, the authentication GW 431 may transmit to the authentication server 433, at least one of the station identification information and the line identification information included in the received authentication request along with the authentication information request to receive the authentication information corresponding to the transmitted information from the authentication server 433.

For example, the authentication GW 431 may transmit to the authentication server 433, the line identification information included in the received authentication request along with the authentication information request. If the authentication GW 431 transmits the line identification information to the authentication server 433, the authentication server 433 reads from the table 1200 stored in the authentication server 433, the station identification information 1220 correlated with the line identification information received from the authentication GW 431. The authentication server 433 transmits the read station identification information 1220 as the authentication information to the authentication GW 431.

Alternatively, the authentication GW 431 may transmit to the authentication server 433, the station identification information included in the received authentication request along with the authentication information request. If the authentication GW 431 transmits the station identification information to the authentication server 433, the authentication server 433 reads from the table 1200 stored in the authentication server 433, the line identification information 1210 correlated with the station identification information 1220 received from the authentication GW 431. The authentication server 433 transmits the read line identification information 1210, as the authentication information, to the authentication GW 431.

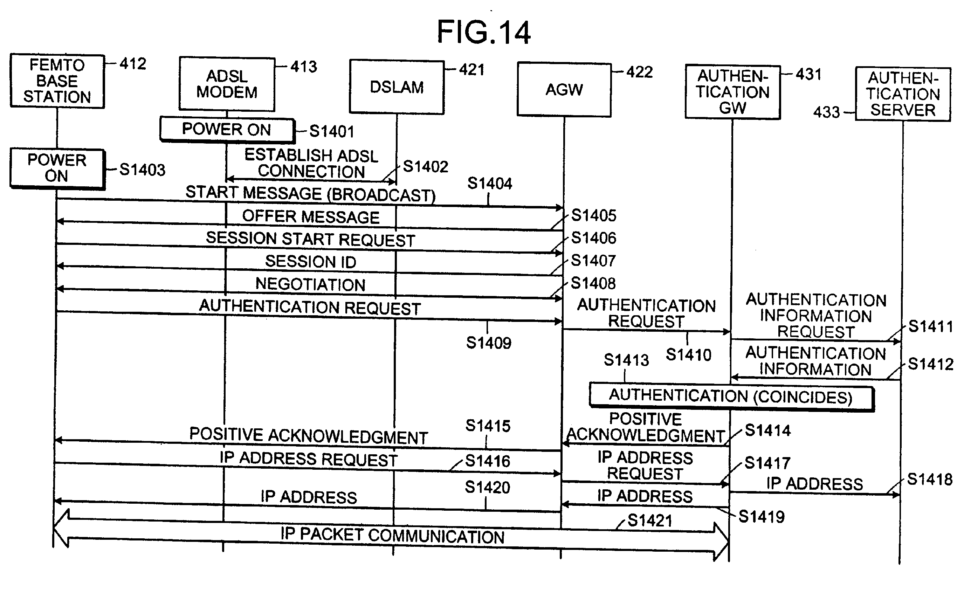

FIG. 14 is a sequence diagram of an operation example of the communication system depicted in FIG. 4. When the ADSL modem 413 is powered on (step S1401), the ADSL modem 413 establishes an ADSL connection with the DSLAM 421 (step S1402). When the femto base station 412 is powered on (step S1403), the femto base station 412 broadcasts a start message (step S1404).

The start message broadcasted at step S1404 is a Active Discovery Initiation (PADI PPPoE) packet for searching a PPPoE server, for example. The start message broadcasted at step S1404 is received by the AGW 422.

The AGW 422 transmits an offer message to the femto base station 412 (step S1405). The offer message transmitted at step S1405 is a PPPoE Active Discovery Offer (PADO) packet, for example. The femto base station 412 transmits a session start request to the AGW 422 (step S1406). The start request transmitted at step S1406 is a PPPoE Active Discovery Request (PADR) packet indicating that a session is to be started, for example.

The AGW 422 transmits to the femto base station 412 through PADO, for example, the session ID of the PPPoE session established with the femto base station 412 (step S1407). The femto base station 412 and the AGW 422 start the PPP session and perform negotiations for the authentication method, etc., through link control protocol (LCP), for example (step S1408).

The femto base station 412 transmits the authentication request including the station identification information and the line identification information to the AGW 422 (step S1409). The AGW 422 transmits to the authentication GW 431, the authentication request transmitted at step S1409 (step S1410). The authentication GW 431 transmits to the authentication server 433, the authentication information request indicating that the authentication information is to be transmitted (step S1411) .

The authentication server 433 transmits the authentication information to the authentication GW 431 (step S1412). The authentication GW 431 determines whether the station identification information and the line identification information correlated in the authentication request transmitted at step S1410 coincides with those correlated in the authentication information transmitted at step S1412 (step S1413). At step S1413, it is assumed that the station identification information and the line identification information coincide with those in the authentication information transmitted at step S1412.

The authentication GW 431 transmits to the AGW 422, a positive acknowledgement to the femto base station 412 (step S1414). The AGW 422 transmits to the femto base station 412, the positive acknowledgement transmitted at step S1414 (step S1415). The femto base station 412 transmits an IP address request to the AGW 422 (step S1416). The AGW 422 transmits to the authentication GW 431, the IP address request transmitted at step S1416 (step S1417).

The authentication GW 431 transmits to the authentication server 433, the IP address allocated to the femto base station 412 (step S1418). The IP address transmitted at step S1418 is correlated with the station identification information and the line identification information and registered in the authentication server 433. The authentication GW 431 transmits to the AGW 422, the IP address allocated to the femto base station 412 (step S1419).

The AGW 422 transmits to the femto base station 412, the IP address transmitted at step S1419 (step S1420). The transmission of the IP address at step S1420 is performed through the Internet Protocol Control Protocol (IPCP), for example. The femto base station 412 and the authentication GW 431 start communicating IP packets with each other (step S1421), and a series of operations is terminated.

The communication system 400 according to the third embodiment transmits the station identification information and the line identification information from the femto base station 412 to the authentication GW 431, and the authentication GW 431 authenticates the correlation between the station identification information and the line identification information as described, thereby enabling the authentication GW 431 to check whether the femto base station 412 is connected to the correct fixed line by the user. Therefore, for example, a provider may know when the femto base station 412 is connected to a fixed line not in the contract with a user.

The station identification information and the line identification information may be transmitted from the femto base station 412 to the authentication GW 431 in the authentication process for establishing a PPP session at the start of communication between the radio base station 110 and the communication server 120. As a result, connection of the femto base station 412 to an unauthorized fixed line by the user is quickly detected.

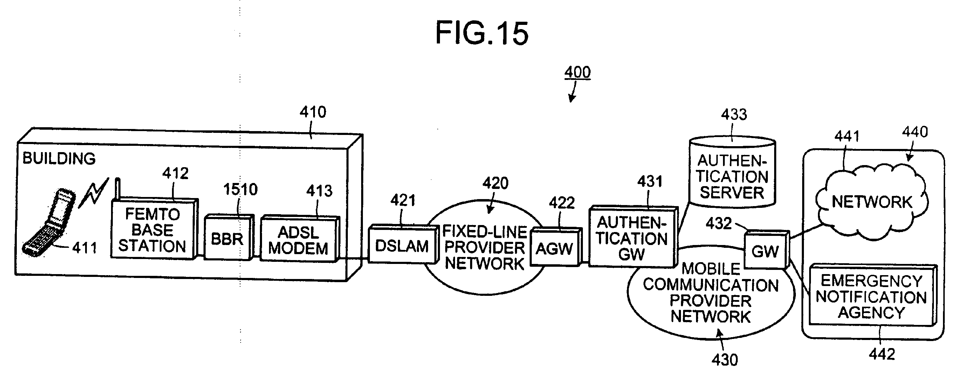

FIG. 15 is a block diagram of a communication system according to a fourth embodiment. In FIG. 15, constituent elements similar to those depicted in FIG. 4 are given the reference numerals used in FIG. 4 and will not be described. As depicted in FIG. 15, a broadband router 1510 (BBR) is provided within the building 410 in addition to the femto base station 412 and the ADSL modem 413 in the fourth embodiment.

The femto base station 412 and the BBR 1510 are radio base stations that a user is able to connect to a fixed line. The BBR 1510 is connected to the ADSL modem 413 through Fast Ether, for example. Connected to the BBR 1510, the femto base station 412 may be connected to a fixed line provided by the fixed-line provider network 420. The femto base station 412 is connected to the BBR 1510 through Fast Ether, for example.

The ADSL modem 413 makes conversions between the Ethernet protocol used by the BBR 1510 and the ADSL protocol used by the fixed-line provider network 420 to relay communication between the BBR 1510 and the fixed-line provider network 420.

The AGW 422 stores a table correlating user IDs, passwords, and fixed-line identification numbers. Upon receiving an authentication request including a user ID and a password from the BBR 1510, the AGW 422 determines whether the user ID and the password correlated in the received authentication request coincides with those correlated in the table.

If the correlated user ID and password coincide with those correlated in the table, the AGW 422 transmits to the authentication GW 431, an authentication request including the user ID and the password correlated in the received authentication request and the fixed-line identification number, as the line identification information. The fixed-line identification number included in the authentication request transmitted by the AGW 422 is a fixed-line identification number correlated with the user ID and the password included in the received authentication request in the table stored in the AGW 422.

An operation example of the communication system 400 depicted in FIG. 15 is similar to the first to third operation examples depicted in FIGs. 5 to 7 and therefore will not be described. An exemplary configuration of the femto base station 412 depicted in FIG. 15 is similar to the configuration depicted in FIG. 8 and therefore will not be described.

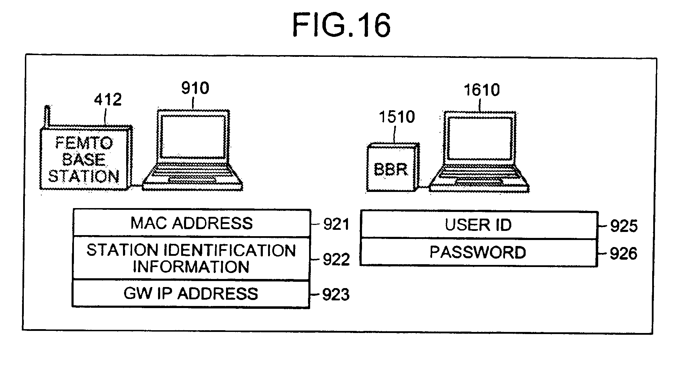

FIG. 16 depicts default settings of the femto base station and the BBR depicted in FIG. 15. In FIG. 16, portions similar to those depicted in FIG. 9 are given the reference numerals used in FIG. 9 and will not be described. The MAC address 921, the station identification information 922, and the GW IP address 923 are input via the PC 910 to the femto base station 412.

For example, a PC 1610 is connected to the BBR 1510 and the default setting of the BBR 1510 is set via the connected PC 1610. For example, the user ID 925 and the password 926 are input via the PC 1610 to the BBR 1510. The user ID 925 and the password 926 input to the BBR 1510 are stored in a memory (not depicted) of the BBR 1510.

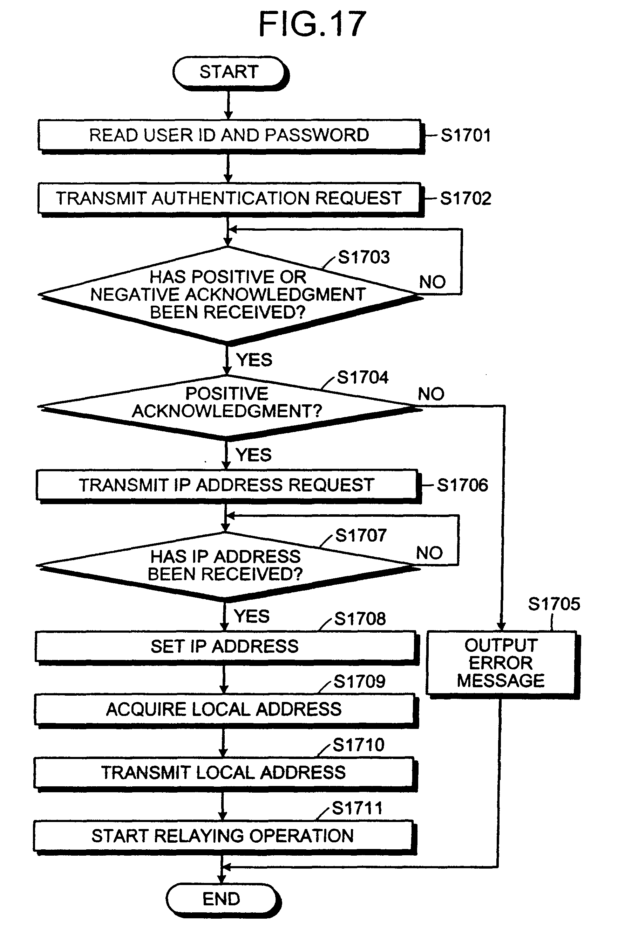

FIG. 17 is a flowchart of an example of the operation of the BBR depicted in FIG. 15. In FIG. 17, it is assumed that the default settings of the femto base station 412 and the BBR 1510 depicted in FIG. 16 have been performed. First (START), the BBR 1510 reads the user ID and the password stored in the memory (step S1701) .

An authentication request is transmitted to the AGW 422, and includes, as the line identification information, the user ID and the password read at step S1701 (step S1702). When the transmitted authentication information is transmitted to the AGW 422, the AGW 422 transmits to the authentication GW 431, an authentication request including the user ID and the password included in the received authentication information and the fixed-line identification number correlated with the user ID and the password.

It is then determined whether a positive or negative acknowledgment has been received from the authentication GW 431 for the authentication request transmitted at step S1702 (step S1703), and the operation waits until the reception (step S1703: NO). When an acknowledgment is received (step S1703: YES), it is determined whether the received acknowledgment is a positive acknowledgment (step S1704). If the received acknowledgment is a negative acknowledgment (step S1704: NO), an error message is output (step S1705), and a series of operations is terminated (END).

At step S1705, for example, a user I/F (not depicted) of the BBR 1510 outputs the error message to a user. If the received acknowledgment is a positive acknowledgment at step S1704 (step S1704: YES), an IP address request is transmitted to the authentication GW 431 requesting an IP address allocated to the BBR 1510 (step S1706).

It is then determined whether the IP address has been received from the authentication GW 431 (step S1707), and the operation waits until the reception (step S1707: NO). When the IP address is received (step S1707: YES), the received IP address is set as the IP address of the BBR 1510 (step S1708).

A local address allocated to the femto base station 412 is then acquired through Dynamic Host Configuration Protocol (DHCP), for example (step S1709). The local address acquired at step S1709 is transmitted to the femto base station 412 (step S1710).

The relaying operation is started for the communication between the femto base station 412 and the authentication GW 431 (step S1711), and a series of operations is terminated (END). For example, at step S1711, the BBR 1510 coverts the local address used between the femto base station 412 and the BBR 1510, and the IP address used between the BBR 1510 and the authentication GW 431 to each other. As a result, the BBR 1510 relays the communication between the femto base station 412 and the authentication GW 431.

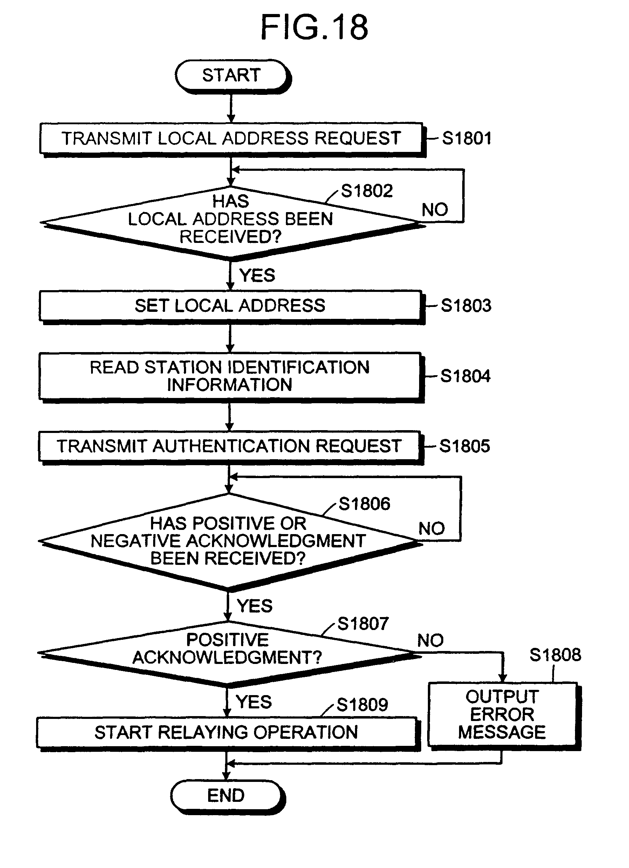

FIG. 18 is a flowchart of an example of the operation of the femto base station depicted in FIG. 15. In FIG. 18, it is assumed that the default setting of the femto base station 412 depicted in FIG. 16 has been performed. First (START), the communication unit 830 of the femto base station 412 transmits a local address request to the BBR 1510 to request a local address allocated to the femto base station 412 (step S1801).

It is then determined whether the local address has been received from the BBR 1510 (step S1802), and the operation waits until the reception (step S1802: NO). When the local address is received (step S1802: YES), the received local address is set as the IP address of the femto base station 412 (step S1803). For example, the received local address is stored in the address storage unit 841 as the IP address of the femto base station 412.

The station identification information stored in the station identification storage unit 842 is read (step S1804), and an authentication request including the read station identification information is transmitted to the authentication GW 431 (step S1805). It is determined whether a positive or negative acknowledgment is received from the authentication GW 431 in response to the authentication request transmitted at step S1805 (step S1806), and the operation waits until the reception (step S1806: NO).

When an acknowledgment is received at step S1806 (step S1806: YES), it is determined whether the received acknowledgment is a positive acknowledgment (step S1807). If the received acknowledgment is a negative acknowledgment (step S1807: NO), an error message is output (step S1808), and a series of operations is terminated (END).

At step S1808, for example, a user I/F (not depicted) of the femto base station 412 outputs the error message to a user. If the received acknowledgment is a positive acknowledgment at step S1807 (step S1807: YES), the relaying operation is started for the communication between the mobile terminal 411 and the mobile communication provider network 430 (step S1809), and a series of operations is terminated (END).

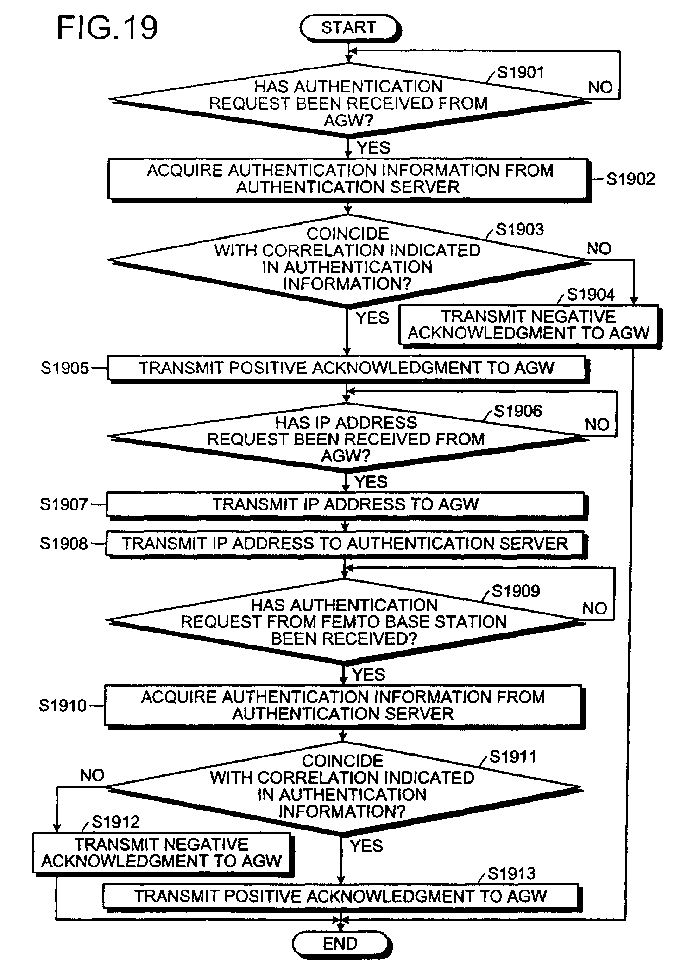

FIG. 19 is a flowchart of an example of the operation of the communication unit of the authentication GW depicted in FIG. 15. First (START), the communication unit 1130 of the authentication GW 431 determines whether an authentication request transmitted from the AGW 422 has been received (step S1901), and the operation waits until the authentication request is received (step S1901: NO).

The authentication request transmitted from the AGW 422 includes line identification information including a user ID, a password, and a fixed-line identification number. When the authentication request is received at step S1901 (step S1901: YES), the authentication information is acquired from the authentication server 433 (step S1902). The details of the operation at step S1902 similar to those at step S1302 depicted in FIG. 13 and therefore will not be described.

It is then determined whether the user ID, the password, and the fixed-line identification number correlated in the authentication request acquired at step S1901 coincide with those correlated in the authentication information acquired at step S1902 (step S1903). For example, the communication unit 1130 reads from the table 1200 stored in the storage unit 1140, the user ID 1211, the password 1212, and the fixed-line identification number 1213 that are correlated.

The communication unit 1130 determines whether the read user ID 1211, password 1212, and fixed-line identification number 1213 coincide with the user ID, the password, and the fixed-line identification number correlated in the authentication request.

If the read user ID, password, and fixed-line identification number do not coincide with those correlated in the acquired authentication information at step S1903 (step S1903: NO), a negative acknowledgment to the BBR 1510 is transmitted to the AGW 422 (step S1904), and a series of operations is terminated (END). The negative acknowledgment transmitted to the AGW 422 is relayed by the AGW 422 and transmitted to the BBR 1510.

If the read user ID, password, and fixed-line identification number coincide with those correlated in the acquired authentication information at step S1903 (step S1903: YES), a positive acknowledgment to the BBR 1510 is transmitted to the AGW 422 (step S1905). The positive acknowledgment transmitted to the AGW 422 is relayed by the AGW 422 and transmitted to the BBR 1510.

It is then determined whether an IP address request transmitted from the BBR 1510 has been received from the AGW 422 (step S1906), and the operation waits until the IP address request is received (step S1906: NO). When the IP address request is received (step S1906: YES), the IP address allocated to the BBR 1510 is transmitted to the AGW 422 (step S1907). The IP address transmitted to the AGW 422 is relayed by the AGW 422 and transmitted to the BBR 1510.

The IP address transmitted at step S1907 is then transmitted to the authentication server 433 (step S1908). The IP address transmitted at step S1908 is registered in the authentication server 433. It is then determined whether an authentication request transmitted from the femto base station 412 has been received from the AGW 422 (step S1909), and the operation waits until the authentication request is received (step S1909: NO).

When the authentication request is received at step S1909 (step S1909: YES), the operation goes to step S1910. Steps S1910 to S1913 are similar to steps S1302 to S1305 depicted in FIG. 13 and therefore will not be described. A negative acknowledgment is transmitted to the AGW 422 at step S1912 or a positive acknowledgment is transmitted to the AGW 422 at step S1913, and a series of operations is terminated (END).

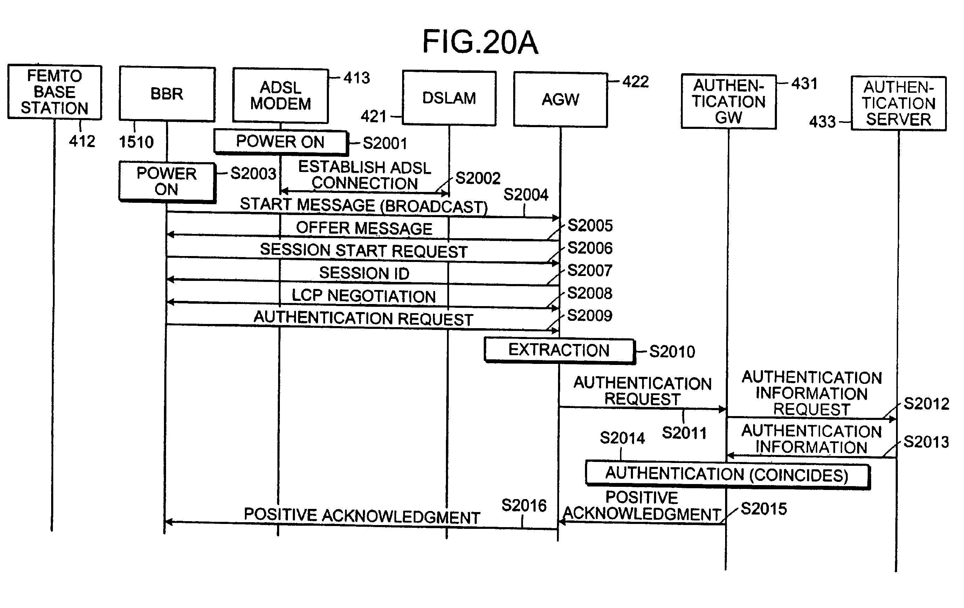

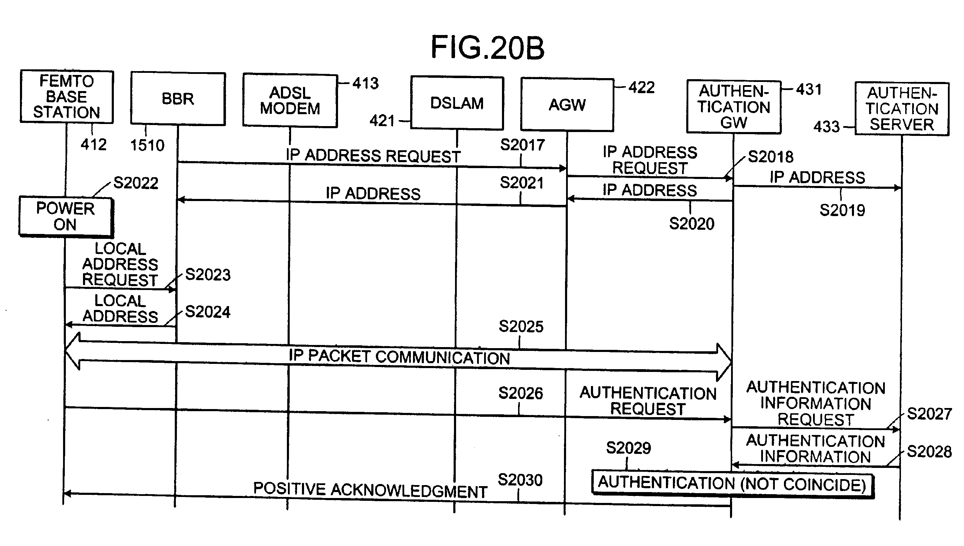

FIG. 20A is a sequence diagram (part one) of an operation example of the communication system depicted in FIG. 15. FIG. 20B is a sequence diagram (part two) of an operation example of the communication system depicted in FIG. 15. As depicted in FIG. 20A, when the ADSL modem 413 is powered on (step S2001), the ADSL modem 413 establishes an ADSL connection with the DSLAM 421 (step S2002).

When the BBR 1510 is powered on (step S2003), the BBR 1510 broadcasts a start message (step S2004). The start message broadcasted at step S2004 is a PADI packet for searching a PPPoE server, for example. The start message broadcasted at step S2004 is received by the AGW 422.

The AGW 422 transmits an offer message to the BBR 1510 (step S2005). The offer message transmitted at step S2005 is a PADO packet, for example. The BBR 1510 transmits a session start request to the AGW 422 (step S2006). The start request transmitted at step S2006 is a PADR packet indicating that a session is to be started, for example.

The AGW 422 transmits the session ID of the PPPoE session established with the BBR 1510 to the BBR 1510 (step S2007). At step S2007, the session ID is transmitted through PADO, for example.

The BBR 1510 and the AGW 422 start the PPP session and perform negotiations for the authentication method, etc., (step S2008). The negotiation is performed through LCP, for example.

The BBR 1510 transmits to the AGW 422, the authentication request including the user ID and the password as the line identification information (step S2009). The AGW 422 extracts from the table stored in the apparatus of the AGW 422, the fixed-line identification number correlated with the user ID included in the authentication request transmitted at step S2009 (step S2010).

The AGW 422 transmits to the authentication GW 431, an authentication request including the user ID and the password included in the authentication request transmitted at step S2009 and the fixed-line identification number extracted at step S2010 as the line identification information (step S2011). Steps S2012 to S2015 depicted in FIG. 20A are similar to the steps S1411 to S1414 depicted in FIG. 14 and therefore will not be described.

Following step S2015, the AGW 422 transmits to the BBR 1510, the positive acknowledgment transmitted at step S2015 (step S2016). Subsequently (proceeding to FIG. 20B), the BBR 1510 transmits an IP address request to the AGW 422 (step S2017). Steps S2018 to S2020 depicted in FIG. 20B are similar to the steps S1417 to S1419 depicted in FIG. 14 and therefore will not be described.

Following step S2020, the AGW 422 transmits to the BBR 1510 the IP address transmitted at step S2020 (step S2021). The transmission of the IP address at step S2021 is performed through the IPCP protocol, for example. When the femto base station 412 is powered on (step S2022), the femto base station 412 transmits a local address request to the BBR 1510 to indicate that a local address is to be transmitted (step S2023).

The BBR 1510 transmits to the femto base station 412, the local address acquired through DHCP, for example (step S2024). The femto base station 412 and the authentication GW 431 start communicating IP packets with each other (step S2025). The femto base station 412 transmits the authentication request including the line identification information to the authentication GW 431 (step S2026).

The authentication GW 431 transmits to the authentication server 433, the authentication information request to indicate that the authentication information is to be transmitted (step S2027). The authentication server 433 transmits the authentication information to the authentication GW 431 (step S2028). The authentication GW 431 acquires the correlation between the line identification information included in the authentication request transmitted at step S2011 and the station identification information included in the authentication request transmitted at step S2026.

The authentication GW 431 determines whether the acquired correlation coincides with the correlation indicated by the authentication information transmitted at step S2012 (step S2029). In this example, it is assumed that the correlation between the station identification information and the line identification information coincides with the correlation indicated by the authentication information. The authentication GW 431 transmits to the femto base station 412, a positive acknowledgement (step S2030), and a series of operations is terminated.

The communication system 400 according to the fourth embodiment transmits the line identification information from the BBR 1510 to the authentication GW 431 and the station identification information from the femto base station 412 to the authentication GW 431 as described. The authentication GW 431 authenticates the correlation between the station identification information and the line identification information, thereby enabling the authentication GW 431 to check whether the femto base station 412 is connected to the correct fixed line by a user even when the femto base station 412 is connectable through the BBR 1510 to the DSLAM 421.

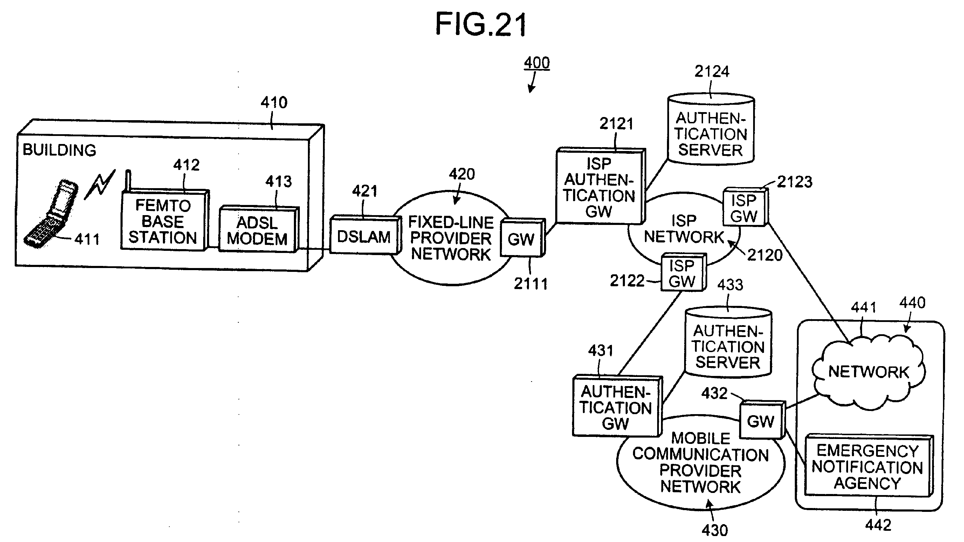

FIG. 21 is a block diagram of a communication system according to a fifth embodiment. In FIG. 21, constituent elements similar to those depicted in FIG. 4 are given the reference numerals used in FIG. 4 and will not be described. As depicted in FIG. 21, the communication system 400 according to the fifth embodiment includes an ISP network 2120 in addition to the configuration depicted in FIG. 4. The femto base station 412 performs communication through the fixed-line provider network 420 and the ISP network 2120 with the mobile communication provider network 430.

The ISP network 2120 includes an ISP authentication GW 2121, an ISP GW 2122, an ISP GW 2123, and an authentication server 2124. The ISP authentication GW 2121 is connected to a GW 2111 included in the fixed-line provider network 420, and controls and relays the communication between the ISP network 2120 and the fixed-line provider network 420.

The ISP GW 2122 is connected to the mobile communication provider network 430, and controls and relays the communication between the ISP network 2120 and the mobile communication provider network 430. The ISP GW 2123 is connected to the network 440, and controls and relays the communication between the fixed-line provider network 420 and the network 440.

The authentication server 2124 stores authentication information indicating preliminarily set correlations between the station identification information of the femto base station 412 and the line identification information of the fixed line to be connected to the femto base station 412 based on a contract made in advance, etc. The authentication server 2124 transmits the authentication information to the ISP authentication GW 2121 in response to an authentication information request from the ISP authentication GW 2121.

Since the authentication of the authentication information is performed in the ISP network 2120, the authentication server 433 of the mobile communication provider network 430 may not store the authentication information. However, in this example, it is assumed that the authentication server 433 of the mobile communication provider network 430 stores the correlation information of the positional information.

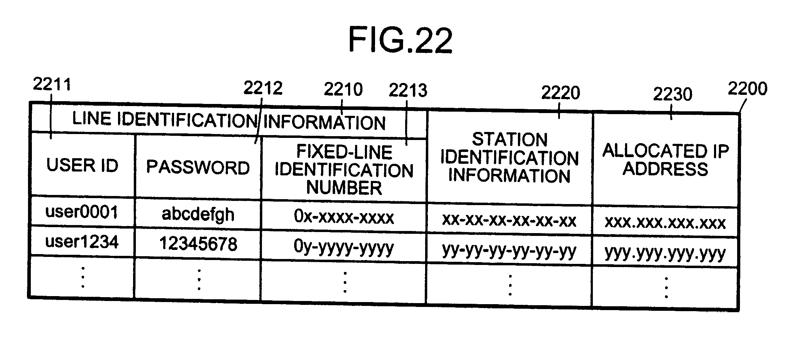

FIG. 22 depicts an example of a table stored in the authentication server of the ISP network depicted in FIG. 21. The ISP GW 2122 (see FIG. 21) of the ISP network 2120 stores, for example, a table 2200 (depicted in FIG. 22) as a table for managing the authentication information. Line identification information 2210, station identification information 2220, and allocated IP addresses 2230 are correlated in the table 2200. The line identification information 2210 includes user ID 2211, passwords 2212, and fixed-line identification numbers 2213.

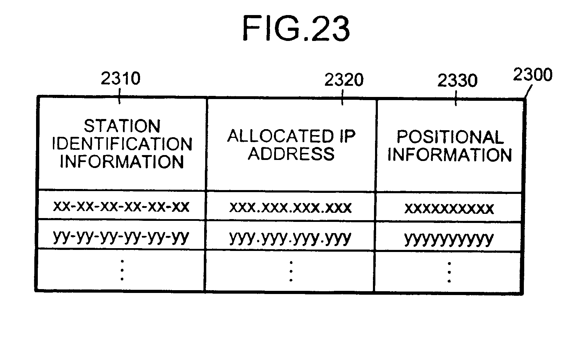

FIG. 23 depicts an example of a table stored in the authentication server of the mobile communication provider network depicted in FIG. 21. The authentication GW 431 (see FIG. 21) of the mobile communication provider network 430 stores, for example, a table 2300 (depicted in FIG. 23) in the storage unit 1140 as a table for managing the correlation information. Station identification information 2310, allocated IP addresses 2320, and positional information 2330 are correlated in the table 2300.

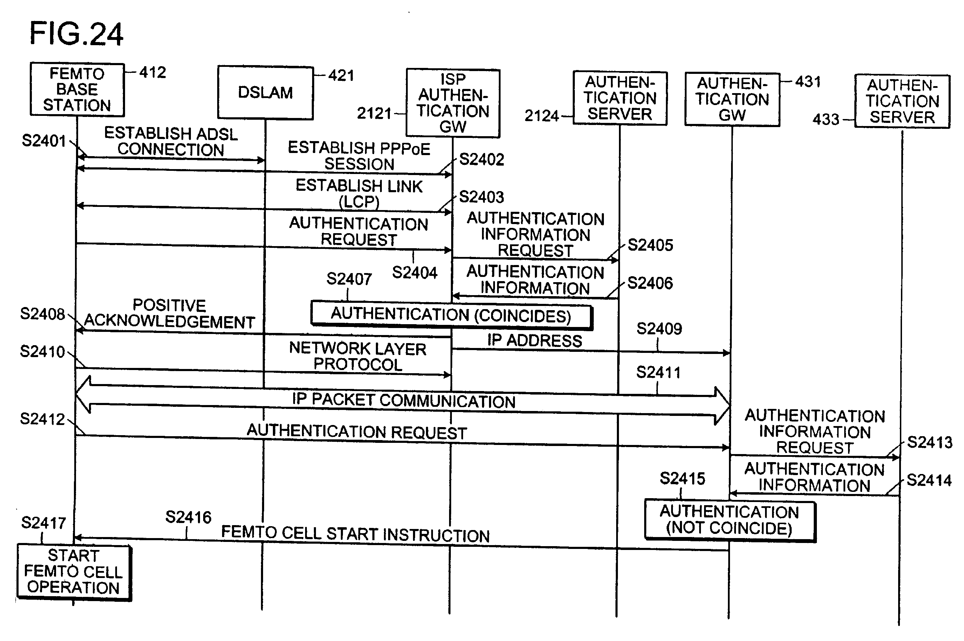

FIG. 24 is a sequence diagram of a first operation example of the communication system depicted in FIG. 21. When the femto base station 412 is powered on, the femto base station 412 establishes an ADSL connection with the DSLAM 421 (step S2401). The femto base station 412 accesses the ISP authentication GW 2121 through the DSLAM 421 to establish a PPPoE session with the ISP authentication GW 2121 (step S2402).

The femto base station 412 then establishes an LCP link with the ISP authentication GW 2121 (step S2403). The femto base station 412 transmits an authentication request to the ISP authentication GW 2121 (step S2404). The authentication request transmitted at step S2404 includes the fixed-line identification number indicative of the fixed line connected to the femto base station 412, and the user ID and the password correlated with the fixed-line identification number.

The ISP authentication GW 2121 transmits an authentication information request to the authentication server 2124 (step S2405). The authentication server 2124 transmits the authentication information to the ISP authentication GW 2121 (step S2406). The ISP authentication GW 2121 determines whether the fixed-line identification number, the user ID, and the password correlated in the authentication request transmitted at step S2404 coincide with those correlated in the authentication information transmitted at step S2406 (step S2407).

At step S2407, it is assumed that the fixed-line identification number, the user ID, and the password correlated in the authentication request coincide with those correlated in the authentication information. The ISP authentication GW 2121 transmits a positive acknowledgment to the femto base station 412 (step S2408). The ISP authentication GW 2121 transmits to the authentication GW 431, an IP address allocated to the femto base station 412 (step S2409).

The IP address transmitted at step S2409 is registered in the authentication server 433. For example, the authentication server 433 stores, as the allocated IP address 2320, the IP address transmitted at step S2409 into the storage unit 1140.

The femto base station 412 and the ISP authentication GW 2121 establish a PPP session through a network layer protocol (step S2410). The femto base station 412 and the authentication GW 431 start communicating IP packets with each other (step S2411). The femto base station 412 transmits an authentication request to the authentication GW 431 (step S2412). The authentication request transmitted at step S2412 includes the station identification information concerning the femto base station 412.

The authentication GW 431 transmits to the authentication server 433, an authentication information request to indicate that the authentication information is to be transmitted (step S2413). The authentication server 433 transmits the authentication information to the authentication GW 431 (step S2414). The authentication GW 431 acquires the correlation between the IP address transmitted at step S2409 and the station identification information included in the authentication request transmitted at step S2412.

The authentication GW 431 determines whether the acquired correlation coincides with the correlation indicated by the authentication information transmitted at step S2414 (step S2415). In the example, it is assumed that the correlation between the IP address and the station identification information coincides with the correlation indicated by the authentication information.

The authentication GW 431 transmits a femtocell start instruction to the femto base station 412 (step S2416). The femto base station 412 starts the operation of the femtocell (step S2417), and a series of operations is terminated. For example, the femto base station 412 starts the operation of relaying the communication between the mobile terminal 411 and the mobile communication provider network 430.

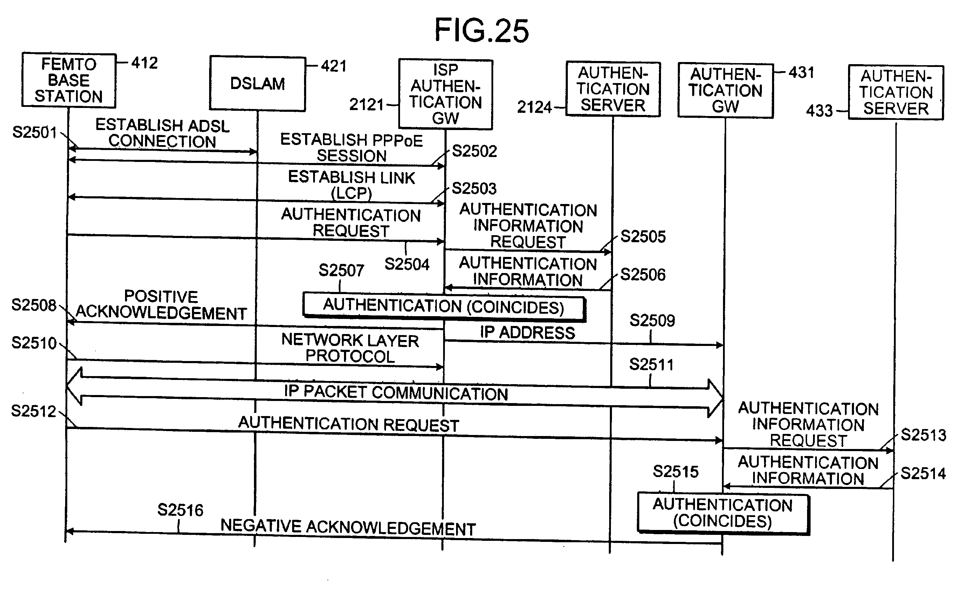

FIG. 25 is a sequence diagram of a second operation example of the communication system depicted in FIG. 21. Steps S2501 to S2515 depicted in FIG. 25 are similar to steps S2401 to S2415 depicted in FIG. 24 and therefore will not be described. However, at step S2515, it is assumed that the correlation between the station identification information and the line identification information included in the authentication request does not coincide with the correlation indicated by the authentication information transmitted at step S2514.

When the correlation between the station identification information and the line identification information does not coincide with the correlation of the authentication information, the authentication GW 431 transmits a negative acknowledgment to the femto base station 412 (step S2516), and a series of operations is terminated. In this case, no PPP session is established between the femto base station 412 and the authentication GW 431, and the femto base station 412 does not start femtocell operation. Therefore, the mobile terminal 411 is unable to perform communication relayed through the femto base station 412 with the mobile communication provider network 430.

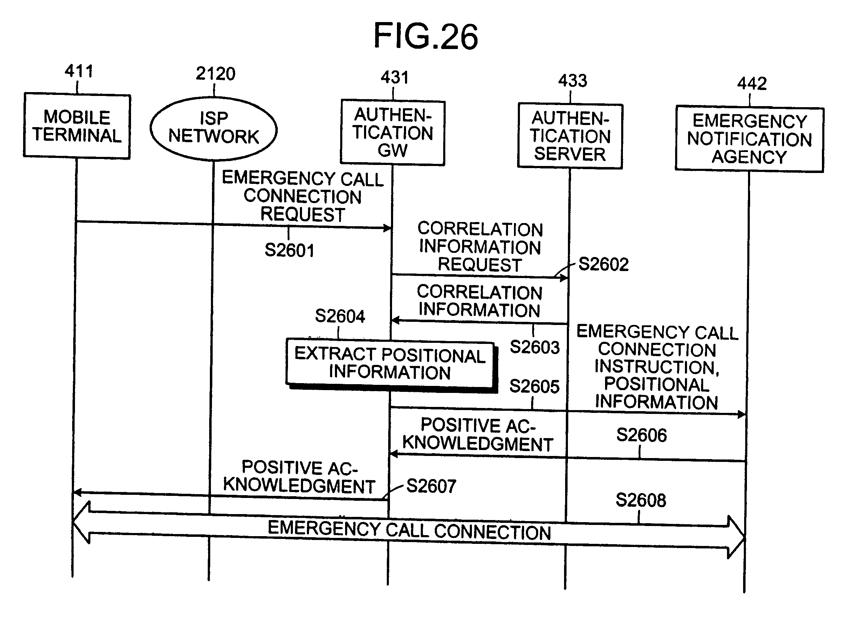

FIG. 26 is a sequence diagram of a third operation example of the communication system depicted in FIG. 21. Steps S2601 to S2608 depicted in FIG. 26 are similar to steps S701 to S708 depicted in FIG. 7 and therefore will not be described. The transmission of the emergency call connection request at step S2601, the transmission of the positive acknowledgment at step S2607, and the emergency call connection at step S2608 are performed through the ISP network 2120.

The communication system 400 according to the fifth embodiment transmits the line identification information from the femto base station 412 to the ISP authentication GW 2121, and ISP authentication GW 2121 authenticates the user ID, the password, and the fixed-line identification number correlated in the station identification information as described. The station identification information is transmitted from the femto base station 412 to the authentication GW 431, and the authentication GW 431 authenticates the IP address correlated with the station identification information and the line identification information.

This enables the authentication GW 431 to check whether the femto base station 412 is connected to the correct fixed line by a user even when the femto base station 412 is connectable through the ISP network 2120 to the mobile communication provider network 430.

As described, the communication server, the radio base station, the communication system, and the communication method disclosed transmit the station identification information and the line identification information from the radio base station to the communication server, and the communication server authenticates the correlated station identification information and line identification information. Therefore, whether the femto base station is connected to the correct fixed line by a user is able to be confirmed.

Although the configuration of connecting the building 410 and the fixed-line provider network 420 through ADSL has been described in the embodiments above, various communication schemes such as FTTH may be used instead of ADSL. Although the configuration of establishing the PPP session between the femto base station 412 (or the BBR 1510) and the authentication GW 431 has been described, the communication protocol between the femto base station 412 and the authentication GW 431 is not limited to PPP.

Although the configuration of transmitting/receiving the IP packets between the femto base station 412 (or the BBR 1510) and the authentication GW 431 has been described, the data communicated between the femto base station 412 and the authentication GW 431 is not limited to IP packets.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from scope of the invention.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it could, for example, be in the form of a signal such as a downloadable data signal provided from an Internet website, or it could be in any other form.

## Claims

1. A communication server for use in a communication system, the communication server communicating with a radio base station capable of being connected to a fixed line by a user, the communication server comprising:
a receiving unit that receives from the radio base station, station identification information identifying the radio base station and line identification information; **characterized by**:
said line identification information identifying a fixed line to which the radio base station is connected,
an acquiring unit that acquires from another communication apparatus in the communication system authentication information indicating preliminarily set correlations between the station identification information and the line identification information;
a determining unit that determines whether a correlation between the station identification information and the line identification information received by the receiving unit coincides with a correlation indicated in the authentication information acquired by the acquiring unit; and
a determination result output unit that outputs a determination result of the determining unit.

2. The communication server according to claim 1, wherein
the acquiring unit acquires correlation information indicating preliminarily set correlations between positional information indicating a connecting position of the radio base station on the fixed line and at least one of the station identification information and the line identification information, and
the communication server further comprises:
an extracting unit that extracts from the correlation information acquired by the acquiring unit, the positional information correlated with at least one of the station identification information and the line identification information received by the receiving unit and
a correlation information output unit that outputs the positional information extracted by the extracting unit.

3. The communication server according to claim 2, wherein
the radio base station performs radio communication with a radio communication terminal near the radio base station, and
the communication server further comprises a transmitting unit that transmits to a destination of a call connection request, the positional information extracted by the extracting unit when the call connection request is transmitted from the radio communication terminal through the radio base station.

4. The communication server according to claim 1, wherein
the receiving unit receives the station identification information and the line identification information at the start of communication with the radio base station.

5. The communication server according to claim 1, wherein
the receiving unit receives the station identification information and the line identification information each time the radio base station is connected to a fixed line.

6. A communication system comprising:
a radio base station capable of being connected to a fixed line by a user, the radio base station transmitting station identification information identifying the radio base station and line identification information identifying the fixed line to which the radio base station is connected; and
a communication server that determines whether a correlation between the station identification information and the line identification information received from the radio base station coincides with a correlation indicated in authentication information acquired from another communication apparatus in the communication system that indicates preliminarily set correlations between the station identification information and the line identification information, the communication server further outputting a determination result.

7. A communication method of a communication system for communicating with a radio base station capable of being connected to a fixed line by a user, the communication method comprising:
receiving from the radio base station, station identification information identifying the radio base station and line identification information identifying a fixed line to which the radio base station is connected **characterized by**:
acquiring authentication information from another communication apparatus in the communication system indicating preliminarily set correlations between the station identification information and the line identification information;
determining whether a correlation between the station identification information and the line identification information received at the receiving coincides with a correlation indicated in the authentication information acquired at the acquiring; and
outputting a determination result obtained at the determining.

## Patentansprüche

1. Kommunikationsserver zur Verwendung in einem Kommunikationssystem, wobei der Kommunikationsserver mit einer Funkbasisstation kommuniziert, die durch einen Benutzer mit einer Festleitung verbunden werden kann, wobei der Kommunikationsserver umfasst:
eine Empfangseinheit, die von der Funkbasisstation Stationsidentifikationsinformationen, welche die Funkbasisstation identifizieren, und Leitungsidentifikationsinformationen empfängt; **dadurch gekennzeichnet, dass**:
die Leitungsidentifikationsinformationen eine Festleitung identifizieren, mit welcher die Funkbasisstation verbunden ist,
eine Erfassungseinheit, die von einer anderen Kommunikationsvorrichtung im Kommunikationssystem Authentifizierungsinformationen erfasst, die vorläufig festgelegte Korrelationen zwischen den Stationsidentifikationsinformationen und den Leitungsidentifikationsinformationen anzeigen;
eine Bestimmungseinheit, die bestimmt, ob eine Korrelation zwischen den Stationsidentifikationsinformationen und den Leitungsidentifikationsinformationen, die durch die Empfangseinheit empfangen werden, mit einer Korrelation übereinstimmt, die in den Authentifizierungsinformationen angezeigt wird, die durch die Erfassungseinheit erfasst werden; und
eine Bestimmungsergebnisausgabeeinheit, die ein Bestimmungsergebnis der Bestimmungseinheit ausgibt.

2. Kommunikationsserver nach Anspruch 1, wobei
die Erfassungseinheit Korrelationsinformationen erfasst, die vorläufig festgelegte Korrelationen zwischen Positionsinformationen, die eine Verbindungsposition der Funkbasisstation auf der Festleitung anzeigen und mindestens eine von den Stationsidentifikationsinformationen und den Leitungsidentifikationsinformationen anzeigen, und
wobei der Kommunikationsserver ferner umfasst:
eine Extraktionseinheit, die aus den durch die Erfassungseinheit erfassten Korrelationsinformationen die Positionsinformationen extrahiert, die mit mindestens einer von den Stationsidentifikationsinformationen und den Leitungsidentifikationsinformationen korreliert sind, die durch die Empfangseinheit empfangen werden, und
eine Korrelationsinformationsausgabeeinheit, welche die durch die Extraktionseinheit extrahierten Positionsinformationen ausgibt.

3. Kommunikationsserver nach Anspruch 2, wobei
die Funkbasisstation Funkkommunikation mit einem Funkkommunikationsendgerät in der Nähe der Funkbasisstation durchführt, und
der Kommunikationsserver ferner eine Sendeeinheit umfasst, welche die durch die Extraktionseinheit extrahierten Positionsinformationen an ein Ziel einer Rufverbindungsanforderung sendet, wenn die Rufverbindungsanforderung vom Funkkommunikationsendgerät durch die Funkbasisstation gesendet wird.

4. Kommunikationsserver nach Anspruch 1, wobei
die Empfangseinheit die Stationsidentifikationsinformationen und die Leitungsidentifikationsinformationen am Beginn der Kommunikation mit der Funkbasisstation empfängt.

5. Kommunikationsserver nach Anspruch 1, wobei
die Empfangseinheit die Stationsidentifikationsinformationen und die Leitungsidentifikationsinformationen jedes Mal empfängt, wenn die Funkbasisstation mit einer Festleitung verbunden wird.

6. Kommunikationssystem, umfassend:
eine Funkbasisstation, die durch einen Benutzer mit einer Festleitung verbunden werden kann, wobei die Funkbasisstation Stationsidentifikationsinformationen, welche die Funkbasisstation identifizieren, und Leitungsidentifikationsinformationen sendet, welche die Festleitung identifizieren, mit der die Funkbasisstation verbunden ist; und
einen Kommunikationsserver, der bestimmt, ob eine Korrelation zwischen den Stationsidentifikationsinformationen und den Leitungsidentifikationsinformationen, die von der Funkbasisstation empfangen werden, mit einer Korrelation übereinstimmt, die in Authentifizierungsinformationen angezeigt wird, die von einer anderen Kommunikationsvorrichtung im Kommunikationssystem erfasst werden und die vorläufig festgelegte Korrelationen zwischen den Stationsidentifikationsinformationen und den Leitungsidentifikationsinformationen anzeigen, wobei der Kommunikationsserver ferner ein Bestimmungsergebnis ausgibt.

7. Kommunikationsverfahren eines Kommunikationssystems zum Kommunizieren mit einer Funkbasisstation, die durch einen Benutzer mit einer Festleitung verbunden werden kann, wobei das Kommunikationsverfahren umfasst:
Empfangen von der Funkbasisstation von Stationsidentifikationsinformationen, welche die Funkbasisstation identifizieren, und Leitungsidentifikationsinformationen, welche eine Festleitung identifizieren, mit welcher die Funkbasisstation verbunden ist, **gekennzeichnet durch**:
Erfassen von Authentifizierungsinformationen von einer anderen Kommunikationsvorrichtung im Kommunikationssystem, die vorläufig festgelegte Korrelationen zwischen den Stationsidentifikationsinformationen und den Leitungsidentifikationsinformationen anzeigen;
Bestimmen, ob eine Korrelation zwischen den Stationsidentifikationsinformationen und den Leitungsidentifikationsinformationen, die beim Empfangen empfangen werden, mit einer Korrelation übereinstimmt, die in den Authentifizierungsinformationen angezeigt wird, die beim Erfassen erfasst werden; und
Ausgeben eines Bestimmungsergebnisses, das beim Bestimmen erhalten wird.

## Revendications

1. Serveur de communication pour utilisation dans un système de communication, le serveur de communication communiquant avec une station de base radio susceptible d'être connectée à une ligne fixe par un utilisateur, le serveur de communication comprenant :
une unité de réception qui reçoit de la station de base radio une information d'identification de station identifiant la station de base radio et une information d'identification de ligne,
**caractérisé :**
**en ce que** ladite information d'identification de ligne identifie une ligne fixe à laquelle la station de base radio est connectée ;
par une unité d'acquisition qui acquiert d'un autre appareil de communication dans le système de communication une information d'authentification indiquant des corrélations établies de façon préliminaire entre l'information d'identification de station et l'information d'identification de ligne ;
par une unité de détermination qui détermine si une corrélation entre l'information d'identification de station et l'information d'identification de ligne reçues par l'unité de réception coïncide avec une corrélation indiquée dans l'information d'authentification acquise par l'unité d'acquisition ; et
par une unité de sortie de résultat de détermination qui sort un résultat de détermination de l'unité de détermination.

2. Serveur de communication selon la revendication 1,
dans lequel l'unité d'acquisition acquiert une information de corrélation indiquant des corrélations établies de façon préliminaire entre une information de position indiquant une position de connexion de la station de base radio sur la ligne fixe et au moins l'une de l'information d'indication de station et de l'information d'indication de ligne, et
dans lequel le serveur de communication comprend en outre :
une unité d'extraction qui extrait de l'information de corrélation acquise par l'unité d'acquisition, l'information de position corrélée avec au moins l'une de l'information d'identification de station et de l'information d'identification de ligne reçues par l'unité de réception ; et
une unité de sortie d'information de corrélation qui sort l'information de position extraite par l'unité d'extraction.

3. Serveur de communication selon la revendication 2,
dans lequel la station de base radio effectue une communication radio avec un terminal de communication radio proche de la station de base radio, et
dans lequel le serveur de communication comprend en outre une unité d'émission qui émet vers la destination d'une demande de connexion d'appel, l'information de position extraite par l'unité d'extraction lorsque la demande de connexion d'appel est émise par le terminal de communication radio par l'intermédiaire de la station de base radio.

4. Serveur de communication selon la revendication 1, dans lequel l'unité de réception reçoit l'information d'identification de station et l'information d'identification de ligne au début d'une communication avec la station de base radio.

5. Serveur de communication selon la revendication 1, dans lequel l'unité de réception reçoit l'information d'identification de station et l'information d'identification de ligne chaque fois que la station de base radio est connectée à une ligne fixe.

6. Système de communication comprenant :
une station de base radio susceptible d'être connectée à une ligne fixe par un utilisateur, la station de base radio émettant une information d'identification de station identifiant la station de base radio et une information d'identification de ligne identifiant la ligne fixe à laquelle est connectée la station de base radio ; et
un serveur de communication qui détermine si une corrélation entre l'information d'identification de station et l'information d'identification de ligne reçues de la station de base radio coïncide avec une corrélation indiquée dans une information d'authentification acquise à partir d'un autre appareil de communication dans le système de communication qui indique des corrélations établies de façon préliminaire entre l'information d'identification de station et l'information d'identification de ligne, le serveur de communication sortant en outre un résultat de détermination.

7. Procédé de communication d'un système de communication destiné à communiquer avec une station de base radio susceptible d'être connectée à une ligne fixe par un utilisateur, le procédé de communication comprenant :
la réception de la station de base radio d'une information d'identification de station identifiant la station de base radio et d'une information d'identification de ligne identifiant une ligne fixe à laquelle la station de base radio est connectée,
**caractérisé par** :
l'acquisition, à partir d'un autre appareil de communication dans le système de communication, d'une information d'authentification indiquant des corrélations établies de façon préliminaire entre l'information d'identification de station et l'information d'identification de ligne ;
la détermination de ce qu'une corrélation entre l'information d'identification de station et l'information d'identification de ligne reçues à la réception coïncide ou non avec une corrélation indiquée dans l'information d'authentification acquise à l'acquisition ; et
la sortie d'un résultat de détermination obtenu à la détermination.
